# FASCICULE DE BREVET EUROPEEN

(11) **EP 1 756 839 B1**
(45) Date de publication et mention de la délivrance du brevet: **29.11.2017**
(21) Numéro de dépôt: 05766696.8
(22) Date de dépôt: 26.05.2005
(51) Int. Cl.: G21C 3/62, C01G 56/00

(54) **PROCEDE DE COPRECIPITATION D'ACTINIDES A DES ETATS D'OXYDATION DISTINCTS ET PROCEDE DE PREPARATION DE COMPOSES MIXTES D'ACTINIDES**
VERFAHREN ZUR CO-PRÄZIPITATION VON AKTINIDEN IN VERSCHIEDENEN OXIDATIONSZUSTÄNDEN UND VERFAHREN ZUR HERSTELLUNG VON GEMISCHTEN AKTINIDVERBINDUNGEN
METHOD FOR CO-PRECIPITATION OF ACTINIDES IN DIFFERENT OXIDATION STATES AND METHOD FOR PREPARATION OF MIXED ACTINIDE COMPOUNDS

(30) Priorité: 28.05.2004 FR 0451058
(43) Date de publication de la demande: 28.02.2007
(73) Titulaire: Commissariat à l'Énergie Atomique et aux Énergies Alternatives, 75015 Paris (FR); AREVA NC, 92400 Courbevoie (FR)
(72) Inventeur: GRANDJEAN, Stéphane, F-30330 SAINT-MARCEL DE CAREIRET (FR); BERES, André, F-07700 SAINT-MARCEL D'ARDECHE (FR); MAILLARD, Christophe, F-30200 BAGNOLS SUR CEZE (FR); ROUSSELLE, Jérôme, 69800 SAINT PRIEST (FR)
(74) Mandataire: Ahner, Philippe
(86) Numéro de dépôt international: PCT/FR2005/050377
(87) Numéro de publication internationale: WO 2005/119699

(56) Documents cités:
- WO-A1-02/28778
- FR-A- 1 329 961
- FR-A- 1 465 032
- GB-A- 978 615
- BHANUSHALI R D ET AL: "REMOVAL OF PLUTONIUM AND AMERICIUM FROM OXALATE SUPERNATANTS BY CO-PRECIPITATION WITH THORIUM OXALATE" JOURNAL OF RADIOANALYTICAL AND NUCLEAR CHEMISTRY, ARTICLES, ELSEVIER SEQUOIA S.A., LAUSANNE, CH, vol. 240, no. 3, 1999, pages 977-979, XP000990788

## Description

La présente invention concerne un procédé de coprécipitation d'actinides qui présentent des états d'oxydation distincts.

De manière plus précise, la présente invention concerne un procédé de coprécipitation, de précipitation simultanée de plusieurs actinides, au moins un des actinides impliqués étant au degré d'oxydation (IV), et au moins un des actinides impliqués étant au degré d'oxydation (III).

L'invention concerne, en outre, un procédé de préparation de composés mixtes d'actinides, en particulier d'oxydes, de nitrures, ou de carbures mixtes d'actinides.

Le domaine technique de l'invention peut, de manière générale, être défini comme celui de la préparation de composés mixtes d'actinides, par exemple d'oxydes mixtes d'actinides, en particulier de l'oxyde mixte d'uranium et de plutonium (U,Pu)O₂ ; mais également de composés mixtes réfractaires incluant une partie de l'ensemble des actinides depuis le thorium jusqu'au californium. L'invention s'intéresse, plus précisément, à la fabrication de tels composés mixtes, par exemple de tels oxydes mixtes par coprécipitation, puis calcination.

En effet, on sait que le plutonium, mélangé le plus souvent à d'autres actinides, en particulier l'uranium, constitue une matière énergétique qui peut être valorisée, soit dans les réacteurs de type « eau légère », soit dans les réacteurs de nouvelle génération (tels que les réacteurs à neutrons rapides, ou autres). Une telle stratégie présente un certain nombre d'avantages. Elle permet notamment une économie de matières fissiles et constitue un moyen de ralentir la croissance non désirée du stock de plutonium, voire, à l'avenir du stock des actinides mineurs.

Le recyclage du plutonium dans les réacteurs à eau pressurisée (REP) est ainsi devenu une réalité industrielle qui se traduit d'année en année par le fait qu'une part croissante du parc de réacteurs de puissance est chargée au moyen d'assemblages mettant en oeuvre un oxyde mixte d'uranium et de plutonium, appelé MOX (UO₂-PuO₂).

A l'avenir dans les réacteurs de nouvelle génération, l'utilisation de combustibles à base d'uranium, de plutonium, et d'actinides mineurs tels que le neptunium, l'américium, le curium, et/ou le californium est envisagée sous la forme d'oxydes, de carbures, ou de nitrures.

L'extension de l'utilisation du combustible MOX, ou le recours à des combustibles avancés contenant outre le plutonium, des actinides mineurs, nécessite à la fois la maîtrise de la qualité et de la fiabilité de la fabrication et la maîtrise des contraintes sévères au niveau des matériaux constituant le combustible pour atteindre les performances désirées de ce combustible en réacteur.

Actuellement, les poudres entrant dans la fabrication du MOX sont préparées par mélange mécanique des oxydes UO₂ et PuO₂. Le mélange obtenu permet, après pressage, frittage et rectification, de produire des pastilles de combustible MOX satisfaisant aux spécifications actuelles.

Le procédé industriel le plus éprouvé, connu sous le nom de procédé MIMAS, comporte deux étapes principales dans la préparation des poudres : un cobroyage des poudres d'oxyde d'uranium et de plutonium pour fabriquer un premier mélange, appelé mélange-mère, qui se caractérise par une teneur en plutonium de 25 à 30 %, puis une dilution à sec de ce mélange-mère dans l'oxyde d'uranium, jusqu'à la teneur finale en plutonium souhaitée.

Pour la fabrication des combustibles, les poudres utilisées doivent répondre à des caractéristiques précises. Elles doivent avoir notamment une bonne aptitude à l'écoulement, de bonnes caractéristiques de compressibilité et une aptitude à la densification par frittage. Un critère important de qualité dans les propriétés finales du matériau fritté est l'homogénéité de la répartition des actinides, par exemple du plutonium, dans ce matériau.

Une homogénéité élevée de cette répartition, dans chaque pastille frittée, est, d'une part, tout à fait favorable pour le comportement du MOX en réacteur, notamment dans une perspective d'accroissement des taux de combustion, et facilite, d'autre part, la complète dissolution du combustible irradié lors des opérations de retraitement.

Cette exigence d'homogénéité élevée de la répartition des actinides au sein du combustible est également incontournable pour une majorité des concepts de combustibles destinés aux réacteurs de nouvelle génération.

Outre les procédés basés sur le mélange et le cobroyage de poudres, certains procédés de co-conversion, par l'intermédiaire de la précipitation ou de la dénitration des actinides en solution tels que l'uranium et le plutonium en solution, constituent une voie qui permet d'aboutir également, après calcination, à un composé mixte, généralement un carbure, un nitrure ou un oxyde mixte tel que l'oxyde (U,Pu)O₂, dont la répartition des actinides est homogène à l'échelle micronique, voire sub-micronique.

Les principaux procédés de co-conversion présentent, par rapport aux procédés de mélange mécanique et de cobroyage de poudres précédents, un certain nombre d'avantages potentiels :
- l'obtention a priori plus facile d'une très bonne homogénéité dans la répartition des actinides, tels que U et Pu, au sein du matériau combustible par exemple au sein de chaque pastille ;
- la diminution du nombre d'étapes, et la simplification de la technologie mise en oeuvre, dans la fabrication de matériaux à base d'une phase réfractaire mixte généralement en un oxyde, un carbure ou un nitrure mixte, comme par exemple le combustible MOX, avec la suppression envisageable des postes de broyage et d'homogénéisation mécanique ;
- la diminution des contraintes d'exploitation liées à la manipulation de poudres majoritairement constituées d'actinides mineurs ;
- la diminution de la quantité de rebuts et de déchets de procédé ;
- la diminution de l'accessibilité au plutonium ou à un autre actinide fissile, et donc la diminution des risques de prolifération lors de la phase d'entreposage préalable des matières nucléaires.

Par opposition aux procédés industriels de fabrication d'oxydes mixtes basés quasi-exclusivement sur le mélange mécanique de poudres d'oxyde, la principale caractéristique commune à la plupart des procédés de co-conversion est d'effectuer le mélange des éléments constitutifs du matériau à synthétiser en solution.

L'homogénéité de la répartition de ces éléments dans le solide formé après réaction (s) chimique(s), est en général obtenue lorsqu'elle est souhaitée. Une seconde caractéristique commune est la dernière étape qui est très généralement un traitement thermique pour l'obtention du matériau final.

Parmi les procédés de co-conversion en oxydes, des actinides, on peut distinguer schématiquement trois grandes familles selon la manière dont est obtenue la phase solide à partir du mélange initial en solution : les procédés par précipitation, les procédés sol-gel, et les procédés par dénitration thermique :
- la précipitation est le moyen le plus largement mentionné et les voies oxalique, ammoniacale, carbonate, peroxyde, surtout exploitées pour la simple conversion en oxyde, notamment de l'uranium ou du plutonium, sont adaptables et optimisables pour la co-conversion ;
- selon un principe analogue, les voies sol-gel permettent d'atteindre l'état solide par l'intermédiaire d'une étape de "gélification" ;
- un "simple" chauffage de la solution permet également d'accéder à l'état solide : ce type de procédés de conversion est désigné par dénitration thermique car la solution initiale est très généralement un milieu nitrique et l'évaporation de la solution conduit à la formation transitoire de sels nitrate.

Les deux derniers types de procédés de co-conversion à savoir le procédé sol-gel ou le procédé de dénitration thermique ne concernent pas directement le domaine de l'invention.

Les procédés sol-gel présentent les inconvénients suivants :
- une expérience industrielle pour la conversion d'actinide(s) beaucoup plus faible que les procédés de précipitation,
- la génération d'effluents ammoniaqués dont la gestion reste problématique, en particulier en présence d'actinides mineurs,
- le recours à un nombre supérieur de réactifs dont le recyclage ou l'élimination des produits de décomposition est très généralement nécessaire.

Les procédés de dénitration, bien que simples dans leur concept, fournissent en général des produits de qualité relativement médiocre, qui nécessitent assez fréquemment l'emploi d'additifs et/ou de traitements mécaniques ou thermiques supplémentaires en aval.

Les procédés de co-conversion basés sur la précipitation, ou plus précisément sur la co-précipitation, font intervenir la préparation intermédiaire d'un sel insoluble, qui est ensuite séparé et calciné, pour obtenir l'oxyde désiré.

Ces procédés permettent habituellement d'obtenir, après calcination, des composés mixtes, tels que des oxydes, de meilleure qualité. En effet, ces procédés offrent la possibilité de moduler les caractéristiques physico-chimiques des composés avec plus de souplesse, en agissant sur les paramètres opératoires de la co-précipitation et/ou de la calcination.

Il est à noter qu'un facteur de décontamination vis-à-vis d'autres éléments résiduels présents en solution, est en général obtenu au stade de la co-précipitation : ces éléments résiduels sont par exemple des impuretés présentes dans les solutions d'actinides à précipiter, comme des produits de fission.

Ce facteur est plus ou moins élevé selon le réactif précipitant et les conditions de sa mise en oeuvre.

Pour qu'un procédé de co-précipitation soit réalisable, en conservant un fort intérêt, un certain nombre d'exigences doivent être satisfaites :
- il doit exister des conditions assurant une solubilité comparable et suffisamment élevée des éléments mélangés en solution avant précipitation ;
- il doit exister des conditions assurant une solubilité comparable et suffisamment faible des éléments lors de la précipitation ;
- la cinétique de précipitation de ces éléments doit être sensiblement identique ;
- les sels insolubles utilisés ne doivent être ni trop stables, ni trop instables pour que l'étape de calcination soit réalisable facilement et de façon sûre ;
- la gestion des sous-produits ne doit pas présenter de difficultés insurmontables.

Dans l'ensemble des procédés de co-précipitation, on distingue habituellement, dans le cas des actinides, en particulier de l'uranium et du plutonium, deux familles : celle où l'on utilise une approche dans laquelle les deux éléments sont au même état d'oxydation, et celle où l'on utilise une approche dans laquelle les deux éléments sont dans des états d'oxydation distincts.

La première approche, est plus immédiate, et consiste à co-précipiter des actinides au même degré d'oxydation, pour atteindre une précipitation parfaitement simultanée et homogène, par co-cristallisation des deux actinides au sein du même réseau : par exemple, pour l'uranium et le plutonium, des rôles équivalents sont joués par l'U(IV) et le Pu (IV) .

La principale difficulté de ces procédés réside dans la stabilisation préalable en solution de cet état d'oxydation commun. Ces procédés sont illustrés dans le document FR-A-2 815 035 qui concerne des actinides à l'état d'oxydation (IV).

Cette approche ne peut toutefois être transposée simplement à l'élaboration d'oxydes mixtes à base d'uranium, de plutonium, de neptunium, de protactinium et/ou de thorium, avec en plus de l'américium, du curium, du berkelium et/ou du californium.

La seconde approche, qui consiste à co-précipiter des actinides tels que U et Pu à des états d'oxydation distincts, est a priori plus complexe et aléatoire.

La forme la plus courante de ces procédés rencontrée dans le retraitement correspond au couple U(VI)-Pu(IV) que l'on obtient facilement en solution nitrique. Le mélange U(IV)-Pu(III) est également accessible en solution, en garantissant le maintien de conditions réductrices et/ou la présence d'un agent antinitreux.

Ces procédés de co-précipitation selon la seconde approche, basés sur ces couples d'U et Pu en solution, mettent en jeu des ions actinides précipitant habituellement sous la forme de sels de structures moléculaires distinctes. Par conséquent, les précipités obtenus ne correspondent pas à une co-cristallisation parfaite de l'uranium et du plutonium. En conséquence, l'homogénéité de répartition du plutonium est limitée intrinsèquement. On peut citer, par exemple, le procédé de « synprécipitation U(VI)-Pu(IV) » en milieu ammoniacal, dans lequel se forment un hydroxyde de plutonium et le diuranate d'ammonium, qui fournissent des poudres d'oxydes non homogènes, nécessitant des traitements mécaniques pénalisants.

De plus, les phénomènes de précipitation non simultanés et les différences de solubilité, observées dans ces conditions, constituent des défauts inhérents à l'ensemble de ces procédés. On peut citer, en exemple, le cas de la précipitation oxalique où l'on observe :
- une différence significative de solubilité entre l'oxalate d'uranyle (U(VI)) et l'oxalate de plutonium (IV) ;
- un décalage des domaines de précipitation respectifs des oxalates de plutonium (III) et d'uranium (IV) .

Par ailleurs, la solubilité de ces sels d'uranium et de plutonium n'est pas influencée de manière identique par les paramètres du procédé, tels que l'acidité et autres.

En d'autres termes, les procédés de coprécipitation selon la seconde approche, mettant en jeu des actinides à des états d'oxydation différents, afin d'amener une précipitation simultanée et homogène de l'ensemble des actinides impliqués doivent remplir l'une des deux conditions suivantes :
- Existence d'un domaine de conditions chimiques propice à la précipitation simultanée et homogène de structures distinctes, chacune propre à un état d'oxydation donné, ce qui est généralement difficilement accessible, sauf si l'on a recours à un compromis dans les conditions de précipitation, au détriment des rendements de précipitation et de l'homogénéité de la répartition des actinides dans le solide précipité ;
- Co-cristallisation des actinides au sein d'une même structure cristalline, ce qui implique au sein de cette structure au moins deux sites pour les actinides, chacun propre à un état d'oxydation donné, ou un site capable d'accepter deux états d'oxydation distincts. Cette structure commune, lorsqu'elle existe, est généralement formée pour une ou quelques proportions bien définies en chacun des actinides. Ceci constitue un handicap pour la souplesse d'un procédé d'élaboration de composés mixtes lorsque des compositions en actinides différentes de celles des composés obtenus par co-cristallisation sont souhaitées.

Dans la seconde approche, à laquelle nous nous intéressons plus particulièrement dans la présente, l'élaboration de composés mixtes avec des caractéristiques de très bonne homogénéité de la répartition des actinides dans le solide précipité puis dans le matériau tel qu'une pastille de combustible, par exemple, nécessite donc de surmonter un certain nombre de difficultés.

Parmi les documents illustrant la coprécipitation des actinides, on peut mentionner les documents suivants :

Le document de KM. MICHAEL ; PS. DHAMI « Recovery of plutonium from oxalate supernatant by coprecipitation using uranous nitrate » BARC/1996/E : 016 (1996) décrit la récupération par coprécipitation du plutonium, contenu dans les eaux-mères oxaliques issues de sa conversion, par addition de nitrate uraneux auxdites eaux-mères.

Le but poursuivi dans ce document, est fondamentalement de diminuer les pertes de plutonium dans les eaux-mères de précipitation, en provoquant une seconde précipitation du plutonium, et non de fabriquer par une seule co-précipitation des composés aptes à fournir par calcination un oxyde mixte, tel que (U,Pu)O₂, parfaitement homogène.

De même, le document de RD. BANUSHALI ; IC. PIUS ; SK. MUJERKEE ; VN. VAIDYA « Removal of plutonium and americium from oxalate supernatants by co precipitation with thorium oxalate », Journal of radioanalytical and nuclear chemistry 240 ; (3) 977 - 979 (1999) est-il relatif à la récupération conjointe du plutonium et de l'américium dans des effluents (« supernatants ») d'oxalates par addition à ces effluents d'oxalate de thorium, puis coprécipitation.

Le but poursuivi dans ce document est similaire à celui du document précédent. Il s'agit de réduire les pertes en plutonium et en américium dans les eaux-mères oxaliques de précipitation du Pu et de l'Am, tout en assurant le confinement de ces deux radioéléments dans une matrice solide.

Le document de C. KELLER ; D. FANG « Uber Karbonatokomplexe des dreiwertigen Americiums sowie des vier und sechs wertigen Urans und Plutoniums », Radiochimica Acta 11,3-4, pp. 123 - 127 (1969), traite d'un mode d'obtention d'un précipité homogène (U,Pu)O₂. L'uranium et le plutonium, initialement à l'état VI, sont réduits conjointement à l'état d'oxydation IV par une électrolyse en milieu alcalin, en présence de carbonate.

Les complexes carbonatés obtenus sont ensuite précipités et décomposés en oxyde par chauffage sous vide. Les inconvénients principaux liés à ce procédé sont la nécessité d'opérer en milieu alcalin et la complexité de l'opération de calcination.

Le document EP-A-0 251 399 est relatif à la précipitation préférentielle du plutonium à partir d'une phase organique, par exemple de TBP, diluée, chargée en plutonium et en uranium, par addition d'un mélange aqueux d'acide oxalique et d'acide nitrique. L'oxalate de plutonium précipité est séché et transformé par chauffage en oxyde de plutonium.

Dans ce procédé, l'uranium, qui accompagne très partiellement le plutonium dans le composé final formé, se trouve, dans la phase organique, à l'état d'oxydation VI, tandis que le plutonium est à l'état d'oxydation IV. Ce composé final ne présente pas les qualités optimales voulues pour l'obtention d'oxydes mixtes parfaitement homogènes.

Le document WO-A-97/25721 est relatif à la précipitation conjointe de l'uranium et du plutonium, afin de les séparer de l'ensemble des éléments présents dans une solution de combustibles irradiés. Le procédé met en jeu les acides carboxyliques ou polycarboxyliques, afin de précipiter l'uranium à l'état d'oxydation VI et le plutonium à l'état d'oxydation IV. Ce procédé se caractérise par l'absence de tout objectif d'homogénéité dans le précipité formé. La différence d'état d'oxydation U,Pu se traduit dans ce cas par un phénomène de ségrégation, noté dans le document, et qui conduit à une précipitation préférentielle du plutonium, tandis que l'uranium reste pour une part non négligeable en solution.

Le document de Atlas, « J. Nucl. Materials », 249(97) 46-51, concerne un procédé de coprécipitation oxalique de U et Th. Il s'agit là d'un cas extrêmement particulier car l'existence d'un seul état d'oxydation stable (IV) du thorium en solution conduit à l'absence de toute possibilité de réaction redox avec U (IV), ce qui n'est pas le cas avec la très grande majorité des autres complexes d'actinides. Dans ce document, qui concerne le couple Th(IV)-U(IV), on co-précipite en fait des actinides au même degré d'oxydation. Avec le thorium qui ne présente qu'un état d'oxydation (IV) en solution, cette co-précipitation par co-cristallisation des actinides est ainsi relativement aisée à obtenir. Ce procédé pourrait être éventuellement transposé à tous les couples Th-An (IV) où An est Pa, Np ou Pu. En revanche, on ne pourrait pas envisager d'appliquer ce procédé à Th-U (IV)-Pu (IV) par exemple, car U (IV) et Pu (IV) ne peuvent coexister simplement en solution : on pourra à ce propos se référer au document FR-A-2 815 035 cité plus bas.

Le procédé développé, dans ce document, s'avère donc intéressant pour la fabrication de combustibles de la filière thorium (U,Th), mais n'est absolument pas applicable, tel quel, à la production d'autres co-oxydes, tels que les co-oxydes U,Pu, homogènes pour le combustible MOX, puisqu'il ne garantit pas le maintien de l'état d'oxydation IV lors de la précipitation, et donc une co-cristallisation de l'uranium et du plutonium.

En d'autres termes, le procédé, décrit dans ce document, a pour seul objectif la préparation par co-précipitation de co-oxydes (U, Th). Il ne peut être appliqué à la préparation par co-précipitation de solutions solides (U,Pu)O₂ parfaites pour la fabrication de combustibles, tels que le combustible MOX, ou d'une très grande majorité d'oxydes mixtes impliquant au moins deux actinides parmi les actinides allant du thorium au californium, suivant l'ordre du tableau périodique des éléments.

Le document FR-A-2 815 035 déjà mentionné plus haut concerne un procédé de coprécipitation d'actinides à l'état d'oxydation (IV) et un procédé de préparation d'oxydes mixtes d'actinides par calcination du précipité obtenu. Ces oxydes mixtes peuvent être utilisés notamment dans la fabrication de combustibles nucléaires de type MOX.

Le procédé de coprécipitation de ce document met en jeu la complexation des actinides à l'état d'oxydation (IV) afin de les stabiliser cinétiquement ou thermodynamiquement en mélange en solution à cet état d'oxydation (IV), avant co-précipitation. Les co-précipités obtenus sont des composés mixtes parfaitement homogènes puisque obtenus par co-cristallisation. Après calcination adéquate, des oxydes mixtes parfaitement homogènes sont produits.

Ce procédé ne peut être appliqué aux actinides suivants de par l'impossibilité de les maintenir simplement à l'état d'oxydation (IV) en solution dans les conditions décrites : l'américium, le curium, le berkelium ou le californium. La mise en oeuvre de ce procédé de co-précipitation n'est pas toujours simple, en particulier la stabilisation du mélange d'actinide (IV) nécessite plusieurs étapes, et est difficilement compatible avec des opérations de co-précipitation en continu, souvent requises pour des fabrications industrielles.

Il existe donc un besoin non encore satisfait pour un procédé permettant de coprécipiter des actinides se trouvant en solution à des états d'oxydations différents : à savoir (IV) et (III), en particulier en milieu acide, tel qu'un milieu acide nitrique.

Il existe, en particulier, un besoin pour un procédé, dans lequel, afin de conserver les états d'oxydations distincts respectifs (IV) et (III) des actinides en solution, et d'obtenir la coprécipitation de ces éléments effectivement aux états d'oxydation distincts et respectifs (IV) et (III), on annihile la réaction redox mutuelle des actinides en solution.

En d'autres termes, il existe un besoin pour un procédé, dans lequel les actinides sont maintenus en solution à des états d'oxydation distincts respectifs (IV) et (III), de manière à les engager ensuite par coprécipitation dans des composés mixtes homogènes qui permettront, après calcination, d'obtenir des composés mixtes, tels que des oxydes mixtes, homogènes s'approchant d'une solution solide parfaite et ne comportant pas d'impuretés minérales.

En d'autres termes, il existe donc un besoin non encore satisfait pour un procédé permettant à la fois :
- de co-précipiter des actinides stabilisés ou présents aux états d'oxydation (IV) et (III) en solution, en particulier en milieu acide tel qu'un milieu acide nitrique,
- et d'obtenir un composé mixte solide, de composition maîtrisée, très homogène à savoir avec une homogénéité égale ou proche de l'homogénéité de solutions solides d'actinides, et contenant qualitativement et quantitativement les actinides aux états d'oxydation (IV) et (III) présents initialement en solution.

Il existe, en particulier un besoin pour un procédé dans lequel les actinides "majeurs" à savoir l'uranium et le plutonium puissent être co-précipitées avec les actinides "mineurs" à savoir neptunium, américium, curium, en un composé mixte homogène tel qu'un oxalate, dont la calcination fournit une phase mixte homogène telle qu'un oxyde.

Il existe, par ailleurs, un besoin pour un procédé qui soit compatible avec :
- les milieux utilisés dans le cycle du combustible, à savoir de manière classique, un milieu nitrique,
- les appareillages associés (simplicité, robustesse),
- un fonctionnement en continu,
- la gestion contraignante des réactifs et des effluents dans un environnement confiné et très radioactif.

Le but de la présente invention est de fournir un procédé de coprécipitation (ou de précipitation simultanée) d'au moins un actinide à l'état d'oxydation (IV) avec au moins un actinide à l'état d'oxydation (III) qui réponde, entre autres, à l'ensemble des besoins, mentionnés ci-dessus, et qui satisfasse aux exigences, déjà précisées plus haut, pour les procédés de coprécipitation en général.

Le but de la présente invention est encore de fournir un procédé de coprécipitation d'au moins un actinide à l'état d'oxydation (IV) avec au moins un actinide à l'état d'oxydation (III), qui ne présente pas les inconvénients, limitations, défauts et désavantages des procédés de l'art antérieur et qui résolve les problèmes de l'art antérieur.

Ce but, et d'autres encore, sont atteints, conformément à l'invention, par un procédé de coprécipitation (ou précipitation simultanée) d'au moins un actinide à l'état d'oxydation (IV) avec au moins un actinide à l'état d'oxydation (III), dans lequel :
dans un premier mode de réalisation du procédé, qui est le cas le plus général, où la stabilisation en solution de l'état d'oxydation (IV) ou (III) d'un ou de plusieurs actinides est nécessaire :
   a) on ajoute un cation monochargé stabilisant constitué uniquement d'atomes d'oxygène, de carbone, d'azote et d'hydrogène ou un composé tel qu'un sel susceptible de former ce cation, à une ou plusieurs solutions d'actinide(s) contenant globalement au moins un actinide An¹ et au moins un actinide An'¹, de manière à obtenir une solution, mélange, d'au moins un actinide An¹ à l'état d'oxydation (IV), d'au moins un actinide An'¹ à l'état d'oxydation (III) et dudit cation monochargé stabilisant, la valeur des états d'oxydation (IV) et (III) ayant éventuellement été obtenue lors d'une étape préliminaire ou simultanée de réduction chimique ou électrochimique ;
   b) on ajoute une solution d'acide oxalique ou d'un de ses sels ou d'un dérivé de celui-ci audit mélange, moyennant quoi on réalise la précipitation simultanée desdits actinides An¹ (IV) et An'¹ (III) et d'une fraction du cation monochargé stabilisant à partir dudit mélange.

Le cation monochargé stabilisant, constitué uniquement d'atomes d'oxygène, de carbone, d'azote et d'hydrogène ou le composé tel qu'un sel susceptible de former ce cation, est ajouté généralement sous la forme d'une solution dudit cation ou composé tel qu'un sel susceptible de former ce cation, solution que l'on mélange avec lesdites un ou plusieurs solution(s) d'actinides.

L'étape a) du procédé de l'invention dans ce premier mode de réalisation peut par exemple être réalisée de la manière suivante :
- on ajoute un cation monochargé stabilisant, constitué uniquement d'atomes d'oxygène, de carbone, d'azote, et d'hydrogène ou un composé tel qu'un sel susceptible de former ce cation, à au moins une première solution aqueuse d'au moins un actinide An¹, de manière à stabiliser à la valeur (IV) l'état d'oxydation du ou desdits An¹, cette valeur (IV) de l'état d'oxydation ayant éventuellement été (étant) obtenue lors d'une étape préliminaire ou simultanée de réduction chimique ou électrochimique ;
- on ajoute ledit cation monochargé stabilisant, à au moins une deuxième solution aqueuse d'au moins un actinide An'¹, de manière à stabiliser à la valeur (III) l'état d'oxydation du ou desdits An'¹, cette valeur (III) de l'état d'oxydation ayant éventuellement été obtenue lors d'une étape préliminaire ou simultanée de réduction chimique ou électrochimique ;
- on mélange, de préférence intimement, lesdites au moins première et deuxième solutions contenant chacune le cation monochargé stabilisant ; et on procède ensuite à l'étape b).

Ledit mélange, solution, qui contient au moins un actinide An¹ (IV) et au moins un actinide An'¹ (III), et stabilisé par ledit cation monochargé, tel qu'un agent antinitreux, peut être aussi obtenu plus directement que par mélange desdites au moins première et deuxième solutions contenant chacune le cation monochargé stabilisant. En particulier, il peut être obtenu par ajout dudit cation monochargé stabilisant à une solution unique contenant au moins un actinide An¹ susceptible d'être stabilisé au degré d'oxydation (IV) et au moins un actinide An'¹ susceptible d'être stabilisé au degré d'oxydation (III), éventuellement au cours d'une étape préliminaire ou simultanée, chimique ou électrochimique d'ajustage redox desdits actinides An¹ et An'¹ respectivement à l'état d'oxydation (IV) et (III). Ledit mélange peut également être obtenu, parfois avantageusement, au cours des opérations de retraitement du combustible, par exemple par co-désextraction desdits actinides An¹ (IV) et An'¹ (III) présents en phase organique dans une solution aqueuse contenant le cation monochargé stabilisant.

De manière générale, ledit mélange peut être obtenu de diverses façons : il contient lesdits actinides An¹ (IV) et An'¹ (III), dont les états d'oxydation sont stabilisés en présence notamment dudit cation monochargé.

Dans un second mode de réalisation du procédé selon l'invention, qui est un cas particulier, où les états d'oxydation respectifs (IV) et (III) des au moins deux actinides impliqués sont stables, au sein d'une même solution sans avoir recours, comme dans le premier mode de réalisation, à un composé stabilisant tel qu'un agent anti-nitreux :
- on mélange, de préférence intimement, au moins une première solution aqueuse d'au moins un actinide An¹ à l'état d'oxydation (IV), et au moins une deuxième solution aqueuse d'au moins un actinide An'¹ à l'état d'oxydation (III) ;
- on ajoute un cation monochargé constitué uniquement d'atomes d'oxygène, de carbone, d'azote et d'hydrogène, et ne possédant pas de propriétés redox vis-à-vis des actinides à coprécipiter, ou un composé tel qu'un sel susceptible de former ce cation, audit mélange, pour obtenir une solution contenant les actinides à précipiter et le cation monochargé ;
- on ajoute une solution d'acide oxalique ou d'un de ses sels ou d'un dérivé de celui-ci audit mélange obtenu après ajout du cation monochargé, moyennant quoi on réalise la précipitation simultanée des actinides aux états d'oxydation (IV) et (III), An¹ (IV) et An'¹ (III) et d'une fraction du cation monochargé à partir dudit mélange.

De manière générale, ledit mélange peut être obtenu de diverses façons : il contient lesdits actinides An¹ (IV) et An'¹ (III) et ledit cation monochargé ajouté.

Dans un troisième mode de réalisation du procédé de l'invention :
- on prépare une solution aqueuse contenant au moins un actinide à l'état d'oxydation (IV) et au moins un actinide à l'état d'oxydation (III), par exemple par simple mélange d'au moins deux solutions contenant chacune un desdits actinides à l'état d'oxydation considéré, lorsque lesdits actinides auxdits états d'oxydation considérés peuvent coexister au sein de la même solution ;
- on ajoute à ladite solution d'actinides une solution d'acide oxalique ou d'un de ses sels ou d'un dérivé de celui-ci à laquelle a été ajouté un cation monochargé constitué uniquement d'atomes d'oxygène, de carbone, d'azote et d'hydrogène ou un composé tel qu'un sel susceptible de former ce cation, moyennant quoi on réalise la précipitation simultanée des actinides aux états d'oxydation (III) et (IV) à partir de ladite solution d'actinides, et d'une fraction dudit cation monochargé contenu dans la solution.

Ainsi, dans ce troisième mode de réalisation du procédé, un cation monochargé constitué uniquement d'atomes d'oxygène, de carbone, d'azote et d'hydrogène, est ajouté dans la solution précipitante d'acide oxalique ou d'un de ses sels ou d'un dérivé de celui-ci, au lieu d'être ajouté dans la solution contenant les actinides à précipiter.

Dans ce troisième mode, dans le cas particulier où les états d'oxydation respectifs (IV) et (III) des au moins deux actinides impliqués sont stables sans avoir recours à un composé stabilisant tel qu'un agent antinitreux, ledit cation monochargé est par exemple identique à celui qui serait ajouté à la solution d'actinides initiale si le second mode de réalisation était utilisé.

Dans ce troisième mode de réalisation, si les états d'oxydation respectifs (IV) et (III) des au moins deux actinides impliqués ne sont pas stables dans la solution, mélange, contenant les actinides à précipiter, un additif, agent stabilisant - cationique ou non - est préalablement ajouté dans ce mélange, ou dans les solutions d'actinides utilisées lors de la préparation de ce mélange. Cet additif est choisi par exemple parmi les composés pouvant maintenir des conditions réductrices en solution ou parmi les composés antinitreux.

De préférence, dans ce troisième mode de réalisation, ledit cation monochargé ne doit pas modifier lors de l'ajout de ladite solution d'acide oxalique ou d'un de ses sels ou d'un dérivé de celui-ci, les états d'oxydation des actinides préexistant dans ladite solution d'actinides, mélange, avant cet ajout.

La présente invention repose sur une nouvelle voie de co-précipitation, par une voie oxalique (IV)-(III) après ajout d'un cation monochargé (constitué uniquement d'atomes d'oxygène, de carbone, d'azote et d'hydrogène), ou simultanément à l'ajout d'un cation monochargé, en solution, qui permet de co-précipiter quantitativement l'ensemble des actinides (IV) et (III) présents en solution, très généralement en un composé oxalate mixte d'un ou plusieurs actinides (IV) et d'un ou plusieurs actinides (III).

Le cation monochargé est dans le cas général un cation dit monochargé "stabilisant" qui est de préférence un agent anti-nitreux employé pour stabiliser les états d'oxydation (IV) et (III) des actinides, ou sinon dans les deuxième et troisième modes de réalisation, il s'agit du cation ajouté préalablement à la précipitation dans le mélange d'actinides et/ou dans la solution d'acide oxalique.

Dans le cas général (premier mode de réalisation), le cation (par exemple : ion hydrazinium pour U (IV)-Pu (III)) sert à stabiliser les états d'oxydation et contribue à former, lors de la coprécipitation, le composé mixte contenant U (IV) et Pu (III).

Dans le 2ème et le 3ème cas, le cation par exemple, l'ion ammonium pour Pu (IV)-Am (III), contribue à former, lors de la coprécipitation, le composé mixte contenant par exemple Pu (IV) et Am (III), sans forcément avoir un rôle stabilisant des états d'oxydation.

Ce cation monochargé rentre très généralement dans la structure du composé précipité et est très généralement responsable de la formation de structures oxalate mixtes d'un ou plusieurs actinides (IV) et d'un ou plusieurs actinides (III) aux propriétés intéressantes. L'intérêt de ces structures est :
- qu'elles sont très généralement plus insolubles que les structures connues d'oxalate simple d'actinide (IV) ou d'oxalate simple d'actinide (III) formées dans les conditions de la co-précipitation mais sans la présence dudit cation,
- que très généralement les sites des actinides (IV) et des actinides (III) dans ces structures sont équivalents, malgré la différence de charge : cela permet d'obtenir des co-précipités parfaitement homogènes (à l'échelle moléculaire), qui accueillent l'ensemble des actinides (IV) et (III) présents initialement en solution, et ceci dans une large gamme de compositions relatives en un ou plusieurs actinides (IV) et en un ou plusieurs actinides (III) .

Dans certains cas, à défaut d'être équivalents, ces sites sont proches à l'échelle moléculaire et peuvent n'être que partiellement occupés, ce qui permet d'obtenir des caractéristiques très similaires à celles citées ci-dessus,
- que les actinides mineurs, comme l'américium, le curium, voire le berkelium et le californium, peuvent être co-précipités quantitativement, par exemple, avec un rendement de précipitation supérieur à 95% pour chaque actinide présent initialement en solution à une concentration supérieure à 5.10⁻³ mol.l⁻¹, avec du thorium et/ou du protactinium et/ou de l'uranium et/ou du neptunium et/ou du plutonium.

En d'autres termes, selon l'invention, une solution d'au moins un actinide (IV) et d'au moins un actinide (III) est préparée notamment en y ajoutant un cation monochargé stabilisant dans le cas général où ce cation permet de stabiliser, ou contribue à stabiliser, au moins un des actinides à l'état d'oxydation (IV) ou (III) dans cette solution. Cette solution est, par exemple, préparée par mélange d'au moins une solution d'actinide (IV) et d'au moins une solution d'actinide (III), après ajout dudit cation monochargé dans chaque solution.

Dans le cas non général, un cation monochargé ou un sel le formant in situ est ajouté dans la solution d'actinides et/ou dans la solution d'acide oxalique ou d'un de ses sels ou d'un dérivé de celui-ci utilisée lors de la co-précipitation.

La précipitation simultanée et homogène des actinides peut être alors obtenue par ajout d'une solution d'acide oxalique ou d'un de ses sels ou d'un dérivé de celui-ci. Des rendements de précipitation quantitatifs, par exemple supérieurs à 95% pour chaque actinide présent initialement en solution à une concentration supérieure à 5.10⁻³ mol.l⁻¹, et une homogénéité submicronique de la répartition de l'ensemble des actinides dans le solide, sont obtenus.

Il est bien évident que, outre les avantages cités ci-dessous, le procédé selon l'invention présente également tous les avantages déjà mentionnés des procédés de précipitation.

Le procédé de l'invention se distingue du procédé décrit dans le document FR-A-2 815 035 par la mise en oeuvre d'actinides aux degrés d'oxydation (IV) et (III), au lieu exclusivement d'actinides au degré d'oxydation (IV).

Par comparaison, le procédé de l'invention permet de minimiser le recours à des additifs complexants nécessaires à la stabilisation cinétique ou thermodynamique des actinides aux degrés d'oxydation (IV) préalablement à la co-précipitation.

Il permet également d'atteindre une très bonne homogénéité du solide co-précipité au moins aussi bonne que celle obtenue par le procédé du document FR-A-2 815 035, dans un large domaine de conditions chimiques, pour des proportions variables des différents actinides.

Surtout, le procédé de l'invention étend cette application à tous les actinides, du thorium au californium, dans la mesure où il est basé sur la co-précipitation d'un ou plusieurs actinides (IV) et d'un ou plusieurs actinides (III). Il peut ainsi être appliqué à la fabrication de composés mixtes avec toutes les combinaisons d'actinides possibles, à condition que ce composé contienne au moins un des actinides suivants : thorium, protactinium, uranium, neptunium et plutonium, et au moins un des actinides suivants : plutonium, américium, curium, berkelium, californium, pour assurer la présence initiale en solution d'au moins un actinide à l'état d'oxydation (IV) et d'au moins un actinide à l'état d'oxydation (III) .

Le procédé de l'invention est enfin plus aisément transposable à une élaboration de composés mixtes d'actinides en continu : il est notamment transposable au génie chimique classique utilisé dans les ateliers industriels de conversion oxalique du plutonium en PuO₂.

Le procédé selon l'invention s'applique, de préférence, à la coprécipitation de deux actinides, mais il peut permettre aussi la coprécipitation de plus de deux actinides, par exemple, jusqu'à quatre actinides.

Dans ce cas, par exemple dans le premier mode de réalisation de l'invention, une solution de n actinides (IV) et de m actinides (III) est préparée, notamment en y ajoutant un cation monochargé stabilisant, à savoir un cation qui permet de stabiliser, ou qui contribue à stabiliser, au moins un des actinides à l'état d'oxydation (IV) ou (III) dans cette solution. Cette solution est, par exemple, préparée par mélange intime de n solutions d'actinide à l'état d'oxydation (IV) et de m solutions d'actinide à l'état d'oxydation (III), m pouvant être égal à ou différent de n, après ajout dudit cation monochargé dans chaque solution, depuis la solution d'An¹ jusqu'à la solution d'Anⁿ à l'état d'oxydation (IV) et depuis la solution d'An'¹ jusqu'à la solution d'An'^{m} à l'état d'oxydation (III).

Puis on réalise la précipitation simultanée desdits actinides An¹ (IV), An² (IV),... Anⁿ (IV), et An'¹ (III), An'² (III), An'^{m} (III) et dudit cation à partir dudit mélange.

Le deuxième mode de réalisation ainsi que le troisième mode de réalisation du procédé de l'invention s'appliquent de la même manière à n + m actinides.

Dans ce qui suit, l'invention est généralement décrite dans le cas de deux actinides, mais on comprendra que cette description pourra s'appliquer à un nombre d'actinides supérieur à 2.

Dans le premier mode de réalisation du procédé de l'invention, le cation monochargé joue aussi généralement le rôle d'agent stabilisant des actinides aux états d'oxydation (III) et (IV) se trouvant dans la solution et il joue aussi généralement le rôle d'agent anti-nitreux. Dans le cas du premier mode de réalisation, le cation monochargé sera donc choisi généralement parmi l'ion hydrazinium ; et les ions hydrazinium comprenant un ou plusieurs groupements alkyle.

L'agent stabilisant éventuellement non cationique utilisé en outre dans le troisième cas peut être choisi parmi les composés antinitreux et/ou antioxydants. De préférence, il est constitué uniquement d'atomes d'oxygène, de carbone, d'azote et d'hydrogène. Cet agent stabilisant peut être choisi dans la liste suivante, non exhaustive :

Parmi les acides sulfoniques et leurs dérivés, les composés présentant des propriétés antinitreuses sont préférés, tels l'acide sulfamique et ses sels.

Parmi l'hydrazine et les dérivés de l'hydrazine, les composés présentant des propriétés antinitreuses sont préférés, tels l'hydrazine et ses sels.

Parmi l'hydroxylamine et les dérivés de l'hydroxylamine, les composés présentant des propriétés antinitreuses et/ou antioxydantes vis-à-vis de certains actinides, sont préférés, tels l'hydroxylamine et ses sels.

Parmi les agents antinitreux, on peut citer l'urée et ses dérivés, la famille des oximes, la famille de l'acide hydroxamique, et de ses dérivés.

Parmi les agents antinitreux et/ou antioxydants vis-à-vis de certains actinides, on peut citer le peroxyde d'hydrogène.

Parmi les antioxydants vis-à-vis de certains actinides, on peut citer l'acide ascorbique et ses sels.

L'agent précipitant est l'acide oxalique, ses sels, tels que l'oxalate d'ammonium ou ses dérivés, tels que les oxalates d'alkyle ; en effet, son utilisation entraîne une série d'avantages particuliers supplémentaires qui seront explicités plus loin.

La solution soumise à précipitation contenant les actinides An¹ et An'¹ respectivement à l'état d'oxydation (IV) et à l'état d'oxydation (III), et la première solution d'un actinide An¹ et la deuxième solution d'un actinide An'¹ qui ont éventuellement servi à la préparer, sont généralement des solutions acides, de préférence des solutions aqueuses acides. De préférence encore, il s'agit de solutions aqueuses d'acide nitrique.

La concentration des actinides An¹ et An'¹, dans la solution contenant les actinides soumise à précipitation, peut varier dans de larges limites, mais elle est généralement de 10⁻⁴ mol.L⁻¹ à 1 mol.L⁻¹, de préférence elle est de 0,1 mol.L⁻¹ à 0,2 mol.L⁻¹.

Le rapport du nombre de moles de cation monochargé présents dans la solution d'actinides et/ou dans la solution oxalique précipitante et dont une fraction sert à la co-précipitation des actinides, au nombre de moles de l'ensemble des actinides An¹ et An'¹ à précipiter est généralement de 0,5 à 5, de préférence de 0,5 à 1.

Les concentrations des actinides présents dans les solutions, mélanges, préparées ou disponibles avant co-précipitation sont généralement fixées, par exemple lors des mélanges initiaux, à des valeurs correspondant aux proportions respectives des actinides dans un composé mixte (oxyde par exemple) susceptible d'être préparé par calcination, à partir du co-précipité obtenu.

De préférence, au moment de la co-précipitation, dans la solution contenant les actinides soumise à précipitation, la somme des concentrations molaires des actinides à l'état d'oxydation (IV) (thorium, protactinium, uranium, neptunium et/ou plutonium selon l'application) dépasse la somme des concentrations molaires des actinides à l'état d'oxydation (III) (américium, curium, berkelium, californium et/ou plutonium selon l'application).

Le procédé, aussi bien dans l'étape de préparation des solutions, que dans l'étape de mélange, que dans l'étape de co-précipitation, précipitation simultanée, est réalisé généralement entre 0°C et l'ébullition, de préférence à une température proche de l'ambiante, par exemple, de 20 à 60°C.

Le pH de précipitation dépend notamment des oxalates mixtes à précipiter mais il est généralement inférieur à 1, de préférence l'acidité finale, à savoir dans le milieu de précipitation après réaction, est voisine de 1 mol.L⁻¹.

Dans le second mode de réalisation du procédé de l'invention, la solution soumise à précipitation contenant An¹ et An'¹ respectivement à l'état d'oxydation (IV) et à l'état d'oxydation (III), et les première et deuxième solutions des actinides An¹ et An'¹ qui ont éventuellement servi à la préparer, sont généralement des solutions acides, de préférence des solutions aqueuses acides.

De préférence, il s'agit de solutions aqueuses d'acide nitrique.

La concentration des actinides An¹ et An'¹ dans la solution contenant les actinides soumise à précipitation peut varier dans de larges limites, mais elle est généralement de 10⁻⁴ mol.L⁻¹ à 1 mol.L⁻¹, de préférence elle est de 0,1 mol.L⁻¹ à 0,2 mol.L⁻¹.

Le cation monochargé est un cation (non stabilisant) tel qu'un ammonium ou un ammonium quaternaire.

On procède ensuite à la co (précipitation) ou précipitation simultanée dans les mêmes conditions que pour le premier mode de réalisation du procédé.

Le procédé, dans ce second mode de réalisation, est réalisé généralement entre 0°C et l'ébullition, de préférence à une température proche de l'ambiante, aussi bien dans l'étape de mélange, que dans l'étape d'addition d'agent précipitant, que dans l'étape de précipitation simultanée.

L'invention a également trait à un procédé de préparation de composés mixtes d'actinides An¹ et An'¹, dans lequel on coprécipite lesdits actinides par le procédé selon l'invention, décrit plus haut, que ce soit dans son premier mode de réalisation, dans son deuxième mode de réalisation, ou dans son troisième mode de réalisation, puis on procède à la calcination du (co)précipité, ainsi obtenu.

Les composés mixtes d'actinides obtenus sont choisis généralement parmi les oxydes, carbures et nitrures mixtes d'actinides.

Du fait que, selon le procédé de l'invention, les composés obtenus à l'issue de la coprécipitation sont des oxalates mixtes homogènes, à savoir des composés dans lesquels les actinides (IV) et (III) occupent des sites équivalents ou proches à l'échelle moléculaire, les composés mixtes préparés après calcination, tels que des oxydes mixtes, sont des composés très homogènes au niveau de la répartition des actinides en leur sein, à savoir très généralement à l'échelle au plus du micromètre et jusqu'à l'échelle moléculaire dans le cas de l'obtention d'une solution solide parfaite.

Les composés mixtes tels que les oxydes mixtes peuvent, en outre, être obtenus en toutes proportions.

Au niveau de leur composition, et c'est un des principaux avantages inattendus procurés par l'invention, les composés mixtes peuvent comprendre, dans leur composition, l'ensemble des actinides du thorium au californium, à condition d'inclure dans cette composition au moins un des actinides suivants : thorium, protactinium, uranium, neptunium et plutonium, et au moins un des actinides suivants : plutonium, américium, curium, berkelium, californium, pour assurer, selon l'invention, la présence initiale en solution d'au moins un actinide à l'état d'oxydation (IV) et d'au moins un actinide à l'état d'oxydation (III) .

De préférence, la proportion totale en actinides (IV) tels thorium, protactinium, uranium, neptunium et plutonium (si son degré d'oxydation est (IV) à la co-précipitation), dépasse la proportion totale en actinides (III) tels américium, curium, berkelium, californium et plutonium (si son degré d'oxydation est (III) à la co-précipitation). C'est la conséquence d'un procédé de co-précipitation préféré selon l'invention dans lequel la concentration molaire totale en actinides à l'état d'oxydation (IV) dépasse la concentration molaire totale en actinides à l'état d'oxydation (III) au moment de la co-précipitation.

La calcination est généralement réalisée dans les conditions suivantes :
- température égale ou supérieure à 650°C ;
- atmosphère oxydante, inerte, ou réductrice, dont le choix dépend de la nature du composé mixte souhaité ;
- durée de la calcination généralement supérieure ou égale à une heure.

L'atmosphère oxydante est généralement une atmosphère comprenant de l'oxygène tel que de l'air.

L'atmosphère inerte est généralement une atmosphère comprenant de l'argon ou de l'hélium.

L'atmosphère réductrice est généralement une atmosphère comprenant un gaz inerte mélangé à l'hydrogène ou du méthane.

Pour la synthèse de nitrures mixtes, l'atmosphère est de préférence un mélange d'azote et d'hydrogène.

Pour la synthèse de carbures mixtes, l'atmosphère est de préférence inerte ou réductrice.

Pour la synthèse de nitrures ou de carbures mixtes, une quantité de carbone très généralement surstoechiométrique par rapport à la quantité d'actinides par exemple sous la forme de charbon actif de surface spécifique élevée (à savoir quelques centaines de m²/g) est en outre de préférence ajoutée au cours de la calcination pour faciliter la réduction carbothermique à température plus élevée, à savoir généralement supérieure ou égale à 1000°C.

Les composés mixtes ainsi obtenus servent, en particulier, pour la fabrication de combustible nucléaire, par exemple de type oxyde mixte d'uranium et de plutonium, dit MOX, ou de type carbure ou nitrure ou oxyde mixte d'uranium, de neptunium, de plutonium, d'américium et de curium, comme envisagé pour les réacteurs nucléaires de nouvelle génération.

Le composé mixte d'actinides préparé, selon l'invention, peut être utilisé comme matière première en vue de la préparation, par mélange de poudres, d'une phase réfractaire de composition différente.

En particulier, un oxyde d'uranium et de plutonium préparé selon l'invention, peut être utilisé soit en guise de mélange-mère de poudres, soit en guise de mélange de poudre à la teneur finale. La suite du procédé de préparation des pastilles de combustible MOX est connue et comprend classiquement des étapes de pressage, frittage et rectification.

Le procédé selon l'invention peut être également avantageusement utilisé pour la fabrication de cibles de transmutation (à base de Np, Am, et/ou de Cm, par exemple) ou pour le conditionnement stable des matières (U, Np, Am, Cm, Th, Pa, Bk, Cf) sous forme d'oxydes, les oxydes étant préparés selon une procédure similaire à celles décrites ci-après.

Le procédé selon l'invention va maintenant être décrit de manière détaillée dans la description qui suit, donnée à titre illustratif et non limitatif.

On décrit, tout d'abord, le premier mode de réalisation du procédé de l'invention, qui est le cas le plus général.

On ajoute, dans ce cas, tout d'abord, un cation monochargé stabilisant, que l'on peut aussi dénommer agent stabilisant sous forme cationique à au moins une première solution aqueuse d'au moins un premier actinide An¹, qui se trouve à l'état d'oxydation (IV).

Avantageusement, ledit cation monochargé fait aussi office d'agent anti-nitreux.

Eventuellement, ladite solution aqueuse subit préalablement ou simultanément une étape de réduction chimique ou électrochimique pour l'obtention de l'état d'oxydation (IV) pour An¹.

Cette réduction chimique ou électrochimique peut par exemple être réalisée dans les conditions suivantes :

Ainsi, pour l'uranium, la réduction de l'U (VI) en U (IV) en milieu nitrique peut être réalisée par l'hydrogène, sous pression, avec un support catalytique, en présence d'un agent antinitreux ; pour le neptunium, la réduction de Np (VI) ou de Np (V) en Np (IV) peut être réalisée par l'hydroxylamine en milieu nitrique ; pour le plutonium, la réduction du Pu (VI) en Pu (IV) peut être réalisée en milieu nitrique par ajout de peroxyde d'hydrogène ; pour le protactinium, la réduction du Pa (V) en Pa (IV) peut être réalisée par électrolyse en milieu acide complexant.

En général, cette solution d'actinide (IV) est une solution acide, de préférence une solution aqueuse d'acide nitrique.

Le cation monochargé stabilisant faisant de préférence en outre, office d'agent anti-nitreux est choisi généralement parmi les ions hydrazinium et alkylhydrazinium, un cation préféré est l'ion hydrazinium. Ce cation monochargé est généralement introduit dans la solution sous la forme d'un composé tel qu'un sel susceptible de donner ce cation monochargé dans les conditions de la solution, par exemple dans les conditions acides de la solution, ou d'une solution concentrée de nitrate de ce cation préparée par mélange lent d'une solution d'hydrazine base et d'une solution d'acide nitrique.

La concentration en acide de la solution est généralement de 0,1 à 5 mol.L⁻¹, de préférence de 1 à 1,5 mol.L⁻¹.

La concentration en actinide An¹ à l'état d'oxydation (IV) dans cette solution est généralement de 10⁻⁴ à 1 mol.L⁻¹, de préférence entre 0,1 et 0,5 mol.L⁻¹.

De la même manière que l'on a préparé ainsi une première solution d'actinide An¹ (IV) comprenant un cation monochargé stabilisant, on prépare, séparément, de préférence simultanément, une seconde solution d'actinide An^{'1} (III), par exemple Pu (III) ; cette préparation se fait généralement dans les mêmes conditions que celles décrites plus haut pour la première solution, en adaptant, si besoin est, les conditions opératoires.

La réduction chimique ou électrochimique, préalable ou simultanée, pour obtenir An'¹ (III), peut par exemple être réalisée dans les conditions suivantes : ainsi, pour le plutonium, la réduction du Pu (IV), Pu (V) ou Pu (VI) en Pu (III) peut être réalisée en milieu nitrique en présence d'ions hydrazinium par électrolyse à un potentiel adapté ou par chauffage modéré de la solution (50-60°C).

De préférence, on ajoute le même cation monochargé stabilisant faisant de préférence office d'agent anti-nitreux que celui utilisé précédemment.

De préférence, le cation qui fait aussi office d'agent anti-nitreux est l'ion hydrazinium. Généralement, la solution d'actinide (III) est une solution d'acide, de préférence une solution aqueuse d'acide nitrique.

La concentration en acide dans la solution d'actinide (III) est généralement de 0,1 à 5 mol.L⁻¹, de préférence de 1,0 à 1,5 mol.L⁻¹.

La concentration en actinides An^{'1} (III), dans la deuxième solution, est généralement de 10⁻⁴ à 1 mol.L⁻¹ et, de préférence, entre 0,1 et 0,5 mol.L⁻¹.

Ainsi, donc, et de préférence, les au moins deux solutions d'actinide (III) et d'actinide (IV) sont toutes deux des solutions aqueuses, de préférence, des solutions aqueuses d'acide nitrique.

Les solutions d'actinide (IV) et d'actinide (III) ainsi préparées sont intimement mélangées, par exemple au moyen d'un agitateur.

Par intimement mélangées, on entend que le milieu est homogène à l'échelle du micromélange.

La stabilité des états d'oxydation (IV) et (III) du fait de l'addition du cation stabilisant est telle que le mélange des deux solutions se produit, sans être gêné par les réactions redox, et sans que soit affecté l'état d'oxydation (IV) et l'état d'oxydation (III) des actinides An¹ et An'¹ avant mélange.

Dans le mélange obtenu, très généralement, aucune réaction entre An¹ (IV) et An'¹ (III) n'est observée et la solution formant le mélange est stable pendant une longue durée pouvant aller de 5 heures jusqu'à au-delà de 7 jours. On dispose donc d'un large délai pour réaliser l'étape finale de coprécipitation ou de précipitation simultanée.

Les proportions de mélange des au moins deux solutions d'actinide(s) (IV) et (III) sont celles qui correspondent aux rapports An¹/An^{'1} dans l'oxyde mixte final.

Le mélange peut être réalisé en toute proportion (0 < An¹/An^{'1} < 100 %). De préférence, il est réalisé de telle manière que la proportion de An¹ soit supérieure à celle de An'¹.

Ainsi, par exemple, dans le cas où l'on souhaite, à l'issue de la calcination, obtenir l'oxyde mixte d'uranium et de plutonium de formule (U_{0,725}, Pu_{0,275})O₂, la proportion de mélange des deux solutions l'une de U (IV) et l'autre de plutonium (III) sera respectivement de 72,5% et de 27,5%.

De même par exemple, dans le cas où l'on souhaite à l'issue de la calcination, obtenir l'oxyde mixte d'uranium et de curium de formule (U_{0,90}Cm_{0,10})O₂, la proportion de mélange des deux solutions, l'une d'U(IV), l'autre de Cm(III), sera respectivement de 90% et de 10%.

Il est à noter que dans certains cas, la solution d'actinide(s) (IV) et d'actinide(s) (III) préparée comme décrit ci-dessus, par mélange des au moins deux solutions d'actinide An'¹ (III) et d'actinide An¹ (IV) contenant un cation monochargé stabilisant, peut être obtenue plus directement, parfois avantageusement. Par exemple, elle peut être obtenue plus directement par mélange d'au moins deux solutions contenant chacune un ou plusieurs actinides, ajout dudit cation monochargé dans le mélange ou, préalablement, dans les solutions d'actinide(s) avant mélange, cet ajout étant réalisé éventuellement au cours d'une étape de réduction chimique ou électrochimique pour l'obtention des états d'oxydation (IV) et/ou (III) requis. Par exemple, elle peut être obtenue plus directement à partir d'une solution unique contenant au moins un actinide An¹ et au moins un actinide An'¹, ajout dudit cation monochargé dans cette solution, cet ajout étant réalisé éventuellement au cours d'une étape de réduction chimique ou électrochimique pour l'obtention des états d'oxydation (IV) et (III) requis.

L'étape suivante du procédé selon l'invention est la coprécipitation ou précipitation simultanée de l'ensemble du ou des actinides (IV) et de l'ensemble du ou des actinides (III) présents, par exemple de U (IV) et de Pu (III).

Cette précipitation est de préférence réalisée par mélange d'une solution d'acide oxalique ou éventuellement d'une solution contenant des ions oxalate tels qu'une solution d'oxalate d'ammonium, au mélange d'actinides (IV) et (III) décrit plus haut.

Cette coprécipitation s'effectue, selon l'invention, et de par l'existence de composés oxalates mixtes d'actinides (IV) et (III), de manière homogène, et la calcination du précipité conduit donc à un composé mixte, par exemple d'oxyde mixte (An¹, An^{'1})O₂, tel que (U,Pu)O₂, également parfaitement homogène notamment dans le cas de U(IV) et de Pu(III).

Lorsqu'on utilise l'acide oxalique pour réaliser la coprécipitation, l'invention présente une série d'avantages particuliers supplémentaires :
- Le réactif est déjà utilisé dans le procédé « PUREX » lors de la conversion finale en oxyde PuO₂ du nitrate de plutonium issu des cycles de purification. Son utilisation dans un procédé de coprécipitation An¹, An'¹ tel qu'un procédé de coprécipitation, U,Pu est a priori compatible avec les appareils existant dans les ateliers de retraitement ;
- La décomposition des oxalates d'actinides est aisée et conduit généralement à des composés tels que des oxydes ayant une bonne aptitude à la frittabilité ;
- La gestion à l'échelle industrielle de ce réactif dans les effluents est aujourd'hui bien maîtrisée.

Un excès d'ions oxalate par rapport à la stoechiométrie de réaction avec les actinides présents dans le mélange d'actinides (IV) et (III) décrit plus haut, est de préférence utilisé. Il est de préférence choisi de manière à obtenir une concentration d'ions oxalate dans la solution surnageant le co-précipité de 0,05 à 0,25 mol.L⁻¹, et mieux de 0,10 à 0,20 mol.L⁻¹. L'acidité du mélange d'actinides (IV) et (III) décrit plus haut, est de préférence ajustée de manière à obtenir une acidité libre dans la solution surnageant le co-précipité, de 0,25 à 2,5 mol.L⁻¹, et mieux de 0,5 à 1,5 mol.L⁻¹.

La coprécipitation, est réalisée généralement à la même température que les étapes précédentes, c'est-à-dire généralement à une température de 0 à 60°C, et elle donne un composé totalement homogène, par exemple un oxalate mixte des actinides (IV) et (III) et du cation monochargé stabilisant.

Ce composé est séparé du mélange, ou plus exactement du surnageant, par tout moyen de séparation liquide-solide adéquat, par exemple par filtration, centrifugation ou autre.

Si l'on souhaite préparer un composé mixte, tel qu'un oxyde mixte, le coprécipité récupéré est ensuite calciné dans une atmosphère adaptée à la nature du composé mixte souhaité selon une programmation en température également adaptée.

Par exemple si l'on souhaite préparer un oxyde mixte (An₁, An^{'}₁)O₂ tel que (U,Pu)O₂ à partir du co-précipité constitué de l'oxalate mixte d'U(IV) et de Pu(III), la calcination est de préférence réalisée sous atmosphère inerte, à une température d'au moins 650°C (de préférence de 950°C) et pour une durée minimale d'une heure (de préférence de 2 heures ou plus).

De préférence, on atteint la température finale de calcination, par exemple, de 950°C, en réalisant des montées en température et en observant des paliers à des températures, par exemple, de 150 et 600°C.

On décrit maintenant le deuxième mode de réalisation du procédé de l'invention, qui est un cas particulier, dans lequel les actinides à coprécipiter peuvent coexister en solution aux états d'oxydation (IV) et (III), sans l'ajout d'un cation faisant office d'agent stabilisant redox et qui est très généralement un agent anti-nitreux.

Dans ce deuxième mode de réalisation :
- au moins une première solution d'actinide An¹ contient cet actinide à l'état d'oxydation (IV) (il s'agit, par exemple, d'une solution nitrique de plutonium (IV)). La concentration d'actinide est généralement de 10⁻⁴ à 1 mol.L⁻¹, de préférence entre 0,1 et 0,5 mol.L⁻¹ ;
- l'acidité est généralement de 0,1 à 5 mol.L⁻¹, de préférence de 1,0 à 1,5 mol.L⁻¹ ;
- au moins une deuxième solution d'actinide An^{'1} contient cet actinide à l'état d'oxydation (III) (il s'agit, par exemple, d'une solution de Am(III) telle qu'une solution nitrique de Am(III)). La concentration d'actinide et l'acidité se situent dans la même plage que précédemment.

Les au moins deux solutions sont mélangées intimement.

On ajoute, par l'intermédiaire d'une solution ou d'un sel, un cation monochargé constitué uniquement d'atomes d'oxygène, de carbone, d'azote et d'hydrogène et ne possédant pas de propriétés oxydo-réductrices vis-à-vis des actinides impliqués, à la solution contenant les actinides aux états d'oxydation (IV) et (III), pour obtenir une solution contenant les actinides à précipiter et le cation monochargé.

Ce cation monochargé ne doit pas être confondu avec le cation monochargé dit "stabilisant" utilisé dans le premier mode de réalisation car il ne possède pas de propriétés stabilisantes des états d'oxydation.

Ce cation monochargé est choisi par exemple parmi l'ion ammonium, et les ions ammonium substitués tels que les ions alkylammonium, plus particulièrement parmi les ions ammonium quaternaires tels que les ions tétralkylammonium, l'ion préféré entre tous est l'ion ammonium.

De même que pour le premier mode de réalisation, le mélange des solutions se produit, sans être gêné par les réactions redox, et sans que soient affectés l'état d'oxydation (IV) et l'état d'oxydation (III) des actinides avant mélange.

La concentration totale d'actinides (IV) dans ce mélange est généralement de 10⁻⁴ à 1 mol.L⁻¹, de préférence entre 0,1 et 0,2 mol.L⁻¹.

La concentration totale d'actinides (III) dans ce mélange est généralement de 10⁻⁴ à 1 mol.L⁻¹, de préférence entre 0,1 et 0,2 mol.L⁻¹. De préférence, elle ne dépasse pas la concentration totale d'actinides (IV) dans le mélange.

De même également, les proportions de mélange des différentes solutions d'actinides (IV) et (III) sont habituellement celles qui correspondent aux proportions des actinides dans le composé mixte final, tel qu'un oxyde mixte final.

La description de la suite des étapes du procédé, dans ce deuxième mode de réalisation, à savoir la co-précipitation et la calcination, est ensuite la même que dans le premier mode de réalisation du procédé ou cas général, traité précédemment. A savoir, cette précipitation est de préférence réalisée par mélange d'une solution d'acide oxalique ou éventuellement d'une solution contenant des ions oxalate telle qu'une solution d'oxalates d'ammonium, au mélange d'actinides (IV) et (III) décrit plus haut.

Cette coprécipitation s'effectue, selon l'invention, et de par l'existence de composés oxalates mixtes d'actinides (IV) et (III), de manière homogène, et la calcination du précipité conduit donc à un composé mixte, par exemple d'oxyde mixte (An¹, An^{'1})O₂, tel que (Pu,Am)O₂, également parfaitement homogène notamment dans le cas de Pu(IV) et de Am(III).

Un excès d'ions oxalate par rapport à la stoechiométrie de réaction avec les actinides présents dans le mélange d'actinides (IV) et (III) décrit plus haut, est de préférence utilisé. Il est de préférence choisi de manière à obtenir une concentration d'ions oxalate dans la solution surnageant le co-précipité de 0,05 à 0,25 mol.L⁻¹, et mieux de 0,10 à 0,20 mol.L⁻¹. L'acidité du mélange d'actinides (IV) et (III) décrit plus haut, est de préférence ajustée de manière à obtenir une acidité libre dans la solution surnageant le co-précipité, de 0,25 à 2,5 mol.L⁻¹, et mieux de 0,5 à 1,5 mol.L⁻¹.

La coprécipitation, est réalisée généralement à la même température que les étapes précédentes, c'est-à-dire généralement à une température de 0 à 60°C, donne un composé totalement homogène, par exemple un oxalate mixte des actinides (IV) et (III) et du cation monochargé.

Ce composé est séparé du mélange, ou plus exactement du surnageant, par tout moyen de séparation liquide-solide adéquat, par exemple par filtration, centrifugation ou autre.

Si l'on souhaite préparer un composé mixte, tel qu'un oxyde mixte, le coprécipité récupéré est ensuite calciné dans une atmosphère adaptée à la nature du composé mixte souhaité selon une programmation en température également adaptée.

Par exemple si l'on souhaite préparer un oxyde mixte (An¹, An^{'1})O₂ tel que (Pu,Am)O₂ à partir du co-précipité constitué de l'oxalate mixte de Pu(IV) et de Am(III), la calcination est de préférence réalisée sous air, à une température d'au moins 650°C (de préférence de 950°C) et pour une durée minimale d'une heure (de préférence de 2 heures ou plus).

De préférence, on atteint la température finale de calcination, par exemple, de 950°C, en réalisant des montées en température et en observant des paliers à des températures, par exemple, de 150 et 600°C.

Le troisième mode de réalisation du procédé, moins courant, consiste à ajouter un cation monochargé constitué uniquement d'atomes d'oxygène, de carbone, d'azote et d'hydrogène, dans la solution précipitante, au lieu de l'ajouter dans la solution contenant les actinides à précipiter.

Ce cation n'a pas le rôle de stabilisant (puisqu'il n'est pas ajouté dans la solution d'actinides), mais il peut être identique au cation monochargé stabilisant du 1er mode de réalisation ou au cation monochargé (non stabilisant) du 2ème mode de réalisation.

La solution précipitante est par exemple une solution d'oxalate d'ammonium, l'ammonium jouant le rôle de ce cation monochargé.

La stabilisation des états d'oxydation (IV) et (III) des actinides dans la solution contenant les actinides à précipiter doit néanmoins être assurée, si nécessaire, par l'ajout d'un agent anti-nitreux et/ou antioxydant cationique ou non cationique, à savoir par exemple choisi, en fonction des actinides impliqués, parmi les composés suivants : l'acide sulfamique, l'urée, le peroxyde d'hydrogène, l'hydroxylamine, l'acide ascorbique, ou par des conditions réductrices adéquates et qui n'interfèrent pas lors de la co-précipitation ou de la calcination du co-précipité constitué de l'oxalate mixte.

La description de la suite des étapes du procédé, dans ce troisième mode de réalisation, à savoir la précipitation, est ensuite la même que dans le premier mode de réalisation du procédé ou cas général, traité précédemment.

### EXEMPLES 1 à 6

L'invention va maintenant être décrite en référence aux exemples suivants, donnés à titre illustratif et non limitatif.

### Exemple 1

Dans cet exemple, on réalise la co-précipitation de U(IV) et de Pu (III), stabilisés en solution par l'ion hydrazinium, par une solution d'acide oxalique.

Les conditions opératoires sont les suivantes :

### Mélange d'actinides :

[U(IV)] = [Pu(III)]=0,056 mol.L⁻¹
[N₂H₅⁺] = 0,10 mol.L⁻¹
[HNO₃] = 1,0 mol.L⁻¹

### Solution précipitante :

[H₂C₂O₄] = 0,50 mol.L⁻¹
[HNO₃] = 1,0 mol.L⁻¹

La co-précipitation simultanée et homogène est obtenue en mélangeant intimement, à température ambiante, le mélange d'actinides et la solution précipitante en proportions égales.

La calcination sous argon pendant une heure à plus de 650°C du co-précipité oxalate, produit un oxyde mixte (U,Pu)O₂ parfaitement homogène, correspondant à une solution solide.

Le rendement de précipitation pour chaque actinide est supérieur à 99%.

### Exemple 2

Dans cet exemple, on réalise la co-précipitation de U(IV) et de Pu(III) stabilisés en solution par l'ion hydrazinium, l'uranium et le plutonium étant en proportions distinctes, par une solution d'acide oxalique.

Les conditions opératoires sont les suivantes :

### Mélange d'actinides :

[U(IV)] = 0,080 mol.L⁻¹
[Pu(III)] = 0,0305 mol.L⁻¹
[N₂H₅⁺] = 0,10 mol.L⁻¹
[HNO₃] = 1,0 mol.L⁻¹

### Solution précipitante :

[H₂C₂O₄] = 0,51 mol.L⁻¹
[HNO₃] = 1,0 mol.L⁻¹

La co-précipitation simultanée et homogène est obtenue en mélangeant intimement, à température ambiante, le mélange d'actinides et la solution précipitante en proportions égales.

Le rendement de précipitation pour chaque actinide est supérieur à 99%.

La calcination sous argon pendant une heure à plus de 650°C du co-précipité constitué d'un oxalate mixte homogène, produit un oxyde mixte (U_{0,725}, Pu₀,₂₇₅)O₂ parfaitement homogène, correspondant à une solution solide.

### Exemple 3

Dans cet exemple, on réalise la co-précipitation de U(IV) et de Pu(III) stabilisés en solution par l'ion hydrazinium, l'uranium étant très majoritaire par rapport au plutonium, par une solution d'acide oxalique.

Les conditions opératoires sont les suivantes :

### Mélange d'actinides :

[U(IV)] = 0,099 mol.L⁻¹
[Pu(III)] = 0,0075 mol.L⁻¹
[N₂H₅⁺] = 0,10 mol.L⁻¹
[HNO₃] = 1,0 mol.L⁻¹

### Solution précipitante :

[H₂C₂O₄] = 0,51 mol.L⁻¹
[HNO₃] = 1,0 mol.L⁻¹

La co-précipitation simultanée et homogène est obtenue en mélangeant intimement, à température ambiante, le mélange d'actinides et la solution précipitante en proportions égales.

Le rendement de précipitation pour chaque actinide est supérieur à 99%.

La calcination sous argon pendant une heure à plus de 650°C du co-précipité constitué d'un oxalate mixte homogène, produit un oxyde mixte (U_{0,93},Pu_{0,07})O₂ parfaitement homogène, correspondant à une solution solide.

### Exemple 4

Dans cet exemple, on réalise la co-précipitation de Th(IV) et de Pu (III), ce dernier étant stabilisé en solution par l'ion hydrazinium, le thorium et le plutonium étant en proportions distinctes, par une solution d'acide oxalique.

Les conditions opératoires sont les suivantes :

### Mélange d'actinides :

[Th(IV)] = 0,16 mol.L⁻¹
[Pu(III)] = 0,04 mol.L⁻¹
[N₂H₅⁺] = 0,20 mol.L⁻¹
[HNO₃] = 1,0 mol.L⁻¹

### Solution précipitante :

[H₂C₂O₄] = 0,7 mol.L⁻¹
[HNO₃] = 1,0 mol.L⁻¹

La co-précipitation simultanée et homogène est obtenue en mélangeant intimement, à température ambiante, le mélange d'actinides et la solution précipitante en proportions égales.

Le rendement de précipitation pour chaque actinide est supérieur à 99%.

La calcination sous air pendant une heure à plus de 650°C du co-précipité constitué d'un oxalate mixte homogène, produit un oxyde mixte (Th_{0,80},Pu_{0,20})O₂ parfaitement homogène, correspondant à une solution solide.

### Exemple 5

Dans cet exemple, on réalise la co-précipitation de Th(IV), d'U(IV), de Np(IV), de Pu (III) et d'Am(III), l'U(IV), le Np(IV), le Pu (III) étant stabilisés en solution dans le mélange par l'ion hydrazinium, par une solution d'acide oxalique.

Les conditions opératoires sont les suivantes :

### Mélange d'actinides :

[Th(IV)] = 0,12 mol.L⁻¹
[U(IV)] = 0,04 mol.L⁻¹
[Np (IV)] = 0,02 mol.L⁻¹
[Pu(III)] = 0,02 mol.L⁻¹
[Am(III)] = 0,0001 mol.L⁻¹
[N₂H₅⁺] = 0,20 mol.L⁻¹
[HNO₃] = 1,0 mol.L⁻¹

### Solution précipitante :

[H₂C₂O₄] = 0,7 mol.L⁻¹
[HNO₃] = 1,0 mol.L⁻¹

La co-précipitation simultanée et homogène est obtenue en mélangeant intimement, à température ambiante, le mélange d'actinides et la solution précipitante en proportions égales.

Le rendement de précipitation pour chaque actinide (hormis l'américium) est supérieur à 99%, celui de l'américium, dans cet exemple beaucoup moins concentré que les autres actinides dans le mélange, est meilleur ou de l'ordre de 80%.

La calcination sous argon pendant une heure à plus de 650°C du co-précipité constitué d'un oxalate mixte homogène, produit un oxyde mixte (Th_{0,60},U_{0,20},Np_{0,10},Pu_{0,10},Am_{0,0005})O₂ parfaitement homogène, proche de, ou correspondant à une solution solide.

### Exemple 6

Dans cet exemple, on réalise la co-précipitation de Pu(IV) et d'Am(III), le plutonium et l'américium étant en proportions distinctes, par une solution d'acide oxalique. Le Pu(IV) et l'Am(III) sont stables dans le mélange, même en l'absence d'agent anti-nitreux. En conséquence, l'ion ammonium est ajouté dans le mélange à l'aide d'une solution d'ammoniaque préalablement acidifiée.

Les conditions opératoires sont les suivantes :

### Mélange d'actinides :

[Pu(IV)] = 0,16 mol.L⁻¹
[Am(III)] = 0,04 mol.L⁻¹
[NH₄] = 0,20 mol.L⁻¹
[HNO₃] = 0,8 mol.L⁻¹

### Solution précipitante :

[H₂C₂O₄] = 0,7 mol.L⁻¹
[HNO₃] = 0,8 mol.L⁻¹

La co-précipitation simultanée et homogène est obtenue en mélangeant intimement, à température ambiante, le mélange d'actinides et la solution précipitante en proportions égales.

Le rendement de précipitation pour chaque actinide est supérieur à 99%.

La calcination sous air pendant une heure à plus de 650°C du co-précipité constitué d'un oxalate mixte homogène, produit un oxyde mixte (Pu_{0,80},Am_{0,20})O₂ homogène, proche de, ou correspondant à une solution solide.

## Revendications

1. Procédé de coprécipitation (ou précipitation simultanée) d'au moins un actinide à l'état d'oxydation (IV) avec au moins un actinide à l'état d'oxydation (III), dans lequel :
a) on ajoute un cation monochargé stabilisant constitué uniquement d'atomes d'oxygène, de carbone, d'azote et d'hydrogène ou un composé tel qu'un sel susceptible de former ce cation, à une ou plusieurs solutions d'actinide(s) contenant globalement au moins un actinide An¹ et au moins un actinide An'¹, de manière à obtenir une solution, mélange, d'au moins un actinide An¹ à l'état d'oxydation (IV), d'au moins un actinide An'¹ à l'état d'oxydation (III) et dudit cation monochargé stabilisant, la valeur des états d'oxydation (IV) et (III) ayant éventuellement été obtenue lors d'une étape préliminaire ou simultanée de réduction chimique ou électrochimique ;
b) on ajoute une solution d'acide oxalique ou d'un de ses sels ou d'un dérivé de celui-ci audit mélange, moyennant quoi on réalise la précipitation simultanée desdits actinides An¹ (IV) et An'¹ (III) et d'une fraction du cation monochargé stabilisant à partir dudit mélange.

2. Procédé selon la revendication 1, dans lequel le cation monochargé stabilisant, constitué uniquement d'atomes d'oxygène, de carbone, d'azote et d'hydrogène ou le composé tel qu'un sel susceptible de former ce cation, est ajouté sous la forme d'une solution dudit cation ou composé tel qu'un sel susceptible de former ce cation, solution que l'on mélange avec lesdites un ou plusieurs solution(s) d'actinides.

3. Procédé selon l'une quelconque des revendications précédentes, dans lequel l'étape a) est réalisée de la manière suivante :
- on ajoute un cation monochargé stabilisant, constitué uniquement d'atomes d'oxygène, de carbone, d'azote, et d'hydrogène ou un composé tel qu'un sel susceptible de former ce cation, à au moins une première solution aqueuse d'au moins un actinide An¹, de manière à stabiliser à la valeur (IV) l'état d'oxydation du ou desdits An¹, cette valeur (IV) de l'état d'oxydation ayant éventuellement été obtenue lors d'une étape préliminaire ou simultanée de réduction chimique ou électrochimique ;
- on ajoute ledit cation monochargé stabilisant, à au moins une deuxième solution aqueuse d'au moins un actinide An'¹, de manière à stabiliser à la valeur (III) l'état d'oxydation du ou desdits An'¹, cette valeur (III) des l'état d'oxydation ayant éventuellement été obtenue lors d'une étape préliminaire ou simultanée de réduction chimique ou électrochimique ;
- on mélange intimement lesdites au moins première et deuxième solutions contenant chacune le cation monochargé stabilisant.

4. Procédé selon la revendication 1 ou 2, dans lequel l'étape a) est réalisée en ajoutant le cation monochargé stabilisant ou le composé, tel qu'un sel, susceptible de former ce cation à une solution unique contenant au moins un actinide An¹ susceptible d'être stabilisé au degré d'oxydation (IV) et au moins un actinide An'¹ susceptible d'être stabilisé au degré d'oxydation (III), éventuellement au cours d'une étape préliminaire ou simultanée, chimique ou électrochimique d'ajustage redox desdits actinides An¹ et An'¹ respectivement à l'état d'oxydation (IV) et (III), de manière à obtenir une solution, mélange, d'au moins un actinide An¹ à l'état d'oxydation (IV), d'au moins un actinide An'¹ à l'état d'oxydation (III) et du cation monochargé stabilisant.

5. Procédé selon la revendication 1 ou 2, dans lequel le mélange auquel est ajouté la solution d'acide oxalique ou d'un de ses sels ou d'un dérivé de celui-ci est préparé par co-désextraction desdits actinides An¹ (IV) et An'¹ (III) présents en phase organique dans une solution aqueuse contenant le cation monochargé stabilisant.

6. Procédé de coprécipitation d'au moins un actinide à l'état d'oxydation (IV) avec au moins un actinide à l'état d'oxydation (III), dans lequel :
- on mélange intimement au moins une première solution aqueuse d'au moins un actinide An¹ à l'état d'oxydation (IV), et au moins une deuxième solution aqueuse d'au moins un actinide An'¹ à l'état d'oxydation (III) ;
- on ajoute un cation monochargé constitué uniquement d'atomes d'oxygène, de carbone, d'azote et d'hydrogène, et ne possédant pas de propriétés redox vis-à-vis des actinides à coprécipiter, ou un composé, tel qu'un sel, susceptible de former ce cation, audit mélange, pour obtenir une solution contenant les actinides à précipiter et le cation monochargé ;
- on ajoute une solution d'acide oxalique ou d'un de ses sels ou d'un dérivé de celui-ci audit mélange obtenu après ajout du cation monochargé, moyennant quoi on réalise la précipitation simultanée des actinides aux états d'oxydation (IV) et (III), An¹ (IV) et An'¹ (III) et d'une fraction du cation monochargé à partir dudit mélange.

7. Procédé de coprécipitation d'au moins un actinide à l'état d'oxydation (IV) avec au moins un actinide à l'état d'oxydation (III), dans lequel :
- on prépare une solution aqueuse contenant au moins un actinide à l'état d'oxydation (IV) et au moins un actinide à l'état d'oxydation (III), par exemple par simple mélange d'au moins deux solutions contenant chacune un desdits actinides à l'état d'oxydation considéré, lorsque lesdits actinides auxdits états d'oxydation considérés peuvent coexister au sein de la même solution ;
- on ajoute à ladite solution d'actinides une solution d'acide oxalique ou d'un de ses sels ou d'un dérivé de celui-ci à laquelle a été ajouté un cation monochargé constitué uniquement d'atomes d'oxygène, de carbone, d'azote et d'hydrogène ou un composé tel qu'un sel susceptible de former ce cation, moyennant quoi on réalise la précipitation simultanée des actinides aux états d'oxydation (III) et (IV) à partir de ladite solution d'actinides, et d'une fraction dudit cation contenu dans la solution.

8. Procédé selon l'une quelconque des revendications 1 à 5, dans lequel ledit cation monochargé stabilisant est choisi parmi les cations jouant le rôle d'agent anti-nitreux.

9. Procédé selon la revendication 8, dans lequel ledit cation monochargé stabilisant est choisi parmi l'ion hydrazinium et les ions hydrazinium comprenant un ou plusieurs groupements alkyle.

10. Procédé selon la revendication 6 ou la revendication 7, dans lequel ledit cation monochargé est choisi parmi l'ion ammonium et les ions ammonium substitués, plus particulièrement parmi les ions ammonium quaternaires tels que les ions tétralkylammonium.

11. Procédé selon la revendication 1 ou la revendication 7, dans lequel l'étape de réduction chimique ou électrochimique est réalisée de la manière suivante :
- pour l'uranium, la réduction de l'U (VI) en U (IV) en milieu nitrique est réalisée par l'hydrogène, sous pression, avec un support catalytique, en présence d'un agent antinitreux ;
- pour le neptunium, la réduction de Np (VI) ou de Np (V) en Np (IV) est réalisée par l'hydroxylamine en milieu nitrique ;
- pour le plutonium, la réduction du Pu (VI) en Pu (IV) est réalisée en milieu nitrique par ajout de peroxyde d'hydrogène, ou la réduction du Pu (IV, V, VI) en Pu (III) est réalisée en milieu nitrique en présence d'ions hydrazinium par électrolyse à un potentiel adapté ;
- pour le protactinium, la réduction du Pa (V) en Pa (IV) est réalisée par électrolyse en milieu acide complexant.

12. Procédé selon la revendication 7, dans lequel on assure en outre la stabilisation des états d'oxydation (IV) et (III) des actinides en ajoutant dans **ladite solution aqueuse** un agent stabilisant, cationique ou non, choisi parmi les composés antinitreux et/ou antioxydants.

13. Procédé selon la revendication 12, dans lequel ledit agent stabilisant est choisi parmi les acides sulfamiques et leurs dérivés tels que l'acide sulfamique et ses sels ; l'hydrazine et les dérivés de l'hydrazine tels que l'hydrazine et ses sels ; l'hydroxylamine et les dérivés de l'hydroxylamine tels que l'hydroxylamine et ses sels ; l'urée et ses dérivés ; les oximes ; l'acide hydroxamique et ses dérivés ; le peroxyde d'hydrogène ; l'acide ascorbique et ses sels.

14. Procédé selon l'une quelconque des revendications précédentes, dans lequel lesdites solutions d'actinides An¹ et An'¹ sont des solutions acides, de préférence des solutions aqueuses acides.

15. Procédé selon la revendication 14, dans lequel lesdites solutions sont des solutions aqueuses d'acide nitrique.

16. Procédé selon l'une quelconque des revendications 1 à 12, dans lequel la concentration des actinides An¹ et des actinides An'¹ dans chacune des solutions est de 10⁻⁴ à 1 mol.L⁻¹, de préférence 0,1 mol.L⁻¹ à 0,5 mol.L⁻¹ dans les solutions d'An¹ ou An'¹, et de préférence de 0,1 à 0,2 mol.L⁻¹ dans la solution ou mélange d'actinides An¹ (IV) et An'¹ (III) à partir duquel est réalisée la coprécipitation.

17. Procédé selon l'une quelconque des revendications précédentes dans lequel le rapport du nombre de moles de cation monochargé stabilisant ou non présentes dans la solution d'actinides et/ou dans la solution oxalique précipitante au nombre de moles de l'ensemble des actinides An¹ et An'¹ à précipiter, est généralement de 0,5 à 5, de préférence de 0,5 à 1.

18. Procédé selon l'une quelconque des revendications précédentes, dans lequel les proportions des actinides dans la solution ou mélange d'un ou plusieurs actinides (IV) et d'un ou plusieurs actinides (III), correspondent aux proportions respectives des actinides dans un composé mixte, tel qu'un oxyde, susceptible d'être préparé par calcination à partir du coprécipité.

19. Procédé selon l'une quelconque des revendications précédentes, dans lequel dans le mélange à partir duquel est réalisée la coprécipitation, la somme des concentrations molaires des actinides à l'état d'oxydation (IV) dépasse la somme des concentrations molaires des actinides à l'état d'oxydation (III).

20. Procédé selon l'une quelconque des revendications précédentes, dans lequel le procédé est réalisé à une température comprise entre 0°C et l'ébullition.

21. Procédé selon l'une quelconque des revendications précédentes, dans lequel la coprécipitation ou précipitation simultanée est réalisée par mélange intime d'une solution contenant des ions oxalates et du mélange d'au moins un actinide (IV) et d'au moins un actinide (III).

22. Procédé selon l'une quelconque des revendications précédentes, dans lequel le ou les actinides à l'état d'oxydation (IV) sont choisis parmi le thorium (IV), le protactinium (IV), le neptunium (IV), l'uranium (IV), et le plutonium (IV).

23. Procédé selon l'une quelconque des revendications précédentes, dans lequel le ou les actinides à l'état d'oxydation (III) sont choisis parmi le plutonium (III), l'américium (III), le curium (III), le berkelium (III) et le californium (III).

24. Procédé selon l'une quelconque des revendications précédentes, dans lequel An¹ est U et An'¹ est Pu.

25. Procédé de préparation de composés mixtes des actinides An¹ et An'¹ dans lequel on coprécipite lesdits actinides à l'état d'oxydation (IV) et à l'état d'oxydation (III) par le procédé selon l'une quelconque des revendications précédentes puis on procède à la calcination du précipité ainsi obtenu.

26. Procédé selon la revendication 25, dans lequel la calcination est réalisée sous atmosphère oxydante, inerte ou réductrice, à une température égale ou supérieure à 650°C et pendant une durée supérieure ou égale à 1 heure.

27. Procédé selon l'une quelconque des revendications 25 et 26 dans lequel les composés mixtes préparés sont choisis parmi les nitrures, carbures et oxydes mixtes d'actinides.

28. Procédé selon la revendication 27, dans lequel du carbone est ajouté au cours de la calcination en vue de la préparation de composés mixtes choisis parmi les nitrures et **carbures** mixtes d'actinides.

29. Procédé selon la revendication 28, dans lequel la calcination est réalisée à une température supérieure ou égale à 1 000°C.

## Patentansprüche

1. Verfahren zur Co-Präzipitation (oder Simultan-Präzipitation) von wenigstens einem Aktinid im Oxidationszustand (IV) mit wenigstens einem Aktinid im Oxidationszustand (III), bei dem :
a) man ein stabilisierendes einfach geladenes Kation, nur bestehend aus Sauerstoff-, Kohlenstoff-, Stickstoff- und Wasserstoffatomen, oder eine zur Bildung dieses Kations geeignete Verbindung, wie etwa ein Salz, einer (oder mehreren) Aktinid(en)lösung(en) beigibt, die global wenigstens ein An¹-Aktinid und wenigstens ein An'¹-Aktinid enthalten, so dass man eine Lösung, Mischung, von wenigstens einem An¹-Aktinid im Oxidationszustand (IV), wenigstens einem An'¹-Aktinid im Oxidationszustand (III) und des genannten stabilisierenden einfach geladenen Kations erhält, wobei der Wert der Oxidationszustände (IV) und (III) eventuell während eines vorausgehenden oder simultanen chemischen oder elektrochemischen Reduktionsschritts erreicht wurde ;
b) man eine Lösung von Oxalsäure oder von einem ihrer Salze oder von einem Derivat von dieser der genannten Mischung beigibt, wodurch man die simultane Präzipitation der genannten An¹-(IV)- und An'¹-(III)-Aktinide und von einer Fraktion des stabilisierenden einfach geladenen Kations aus der genannten Mischung realisiert.

2. Verfahren nach Anspruch 1, bei dem das stabilisierende einfach geladene Kation, nur bestehend aus Sauerstoff-, Kohlenstoff-, Stickstoff- und Wasserstoffatomen, oder die zur Bildung dieses Kations geeignete Verbindung, wie etwa ein Salz beigegeben wird in Form einer Lösung des genannten Kations oder der genannten zur Bildung dieses Kations geeignete Verbindung wie etwa ein Salz, wobei man diese Lösung mit der (den) genannten (mehreren) Aktinid(en)lösung(en) mischt.

3. Verfahren nach einem der vorhergehenden Ansprüche, bei dem der Schritt a) auf folgende Weise durchgeführt wird :
- man gibt ein stabilisierendes einfach geladenes Kation, nur bestehend aus Sauerstoff-, Kohlenstoff-, Stickstoff- und Wasserstoffatomen, oder eine zur Bildung dieses Kations geeignete Verbindung wie etwa ein Salz wenigstens einer ersten wässrigen Lösung von wenigstens einem Aktinid An¹ bei, um den Oxidationszustand des oder der genannten An¹ auf dem Wert (IV) zu stabilisieren, wobei dieser Wert (IV) des Oxidationszustands eventuell während eines vorausgehenden oder simultanen chemischen oder elektrochemischen Reduktionsschritts erreicht wurde ;
- man gibt das genannte stabilisierende einfach geladene Kation wenigstens einer zweiten wässrigen Lösung von wenigstens einem Aktinid An'¹ bei, um den Oxidationszustand des oder der genannten An'¹ auf dem Wert (III) zu stabilisieren, wobei dieser Wert (III) des Oxidationszustands eventuell während eines vorausgehenden oder simultanen chemischen oder elektrochemischen Reduktionsschritts erreicht wurde ;
- man vermischt die genannten wenigstens erste und zweite Lösungen, von denen jede das stabilisierende einfach geladene Kation enthält, eng miteinander.

4. Verfahren nach Anspruch 1 oder 2, bei dem der Schritt a) durchgeführt wird, indem das stabilisierende einfach geladene Kation oder die zur Bildung dieses Kations geeignete Verbindung wie etwa ein Salz einer einzigen wenigstens ein im Oxidationsgrad (IV) stabilisierbares Aktinid An¹ und wenigstens ein im Oxidationsgrad (III) stabilisierbares Aktinid An'¹ enthaltenden Lösung beigegeben wird, eventuell im Laufe eines vorausgehenden oder simultanen chemischen oder elektrochemischen Redox-Einstellungsschritts der genannten Aktinide An¹ und An'¹ jeweils im Oxidationszustand (IV) und (III), um eine Lösung, Mischung, von wenigstens einem An¹-Aktinid im Oxidationszustand (IV), wenigstens einem An'¹-Aktinid im Oxidationszustand (III) und des genannten stabilisierenden einfach geladenen Kations zu erhalten.

5. Verfahren nach Anspruch 1 oder 2, bei dem die Mischung, der die Lösung von Oxalsäure oder von einem ihrer Salze oder von einem Derivat von dieser beigegeben wird, hergestellt wird durch Co-Rückextraktion der genannten Aktinide An¹ (IV) und An'¹ (III) in der organischen Phase in einer das stabilisierende einfach geladene Kation enthaltenden wässrigen Lösung.

6. Verfahren zur Co-Präzipitation von wenigstens einem Aktinid im Oxidationszustand (IV) mit wenigstens einem Aktinid im Oxidationszustand (III), bei dem :
- man wenigstens eine erste wässrige Lösung von wenigstens einem Aktinid An¹ im Oxidationszustand (IV) und wenigstens eine zweite wässrige Lösung von wenigstens einem Aktinid An'¹ im Oxidationszustand (III) eng vermischt;
- man ein einfach geladenes Kation, nur bestehend aus Sauerstoff-, Kohlenstoff-, Stickstoff- und Wasserstoffatomen, das keine Redox-Eigenschaften gegenüber zu co-präzipitierenden Aktiniden besitzt, oder eine Verbindung wie zum Beispiel ein Salz, fähig dieses Kation zu bilden, der genannten Mischung beigibt, um eine Lösung zu erhalten, welche die zu präzipitierenden Aktinide und das einfach geladene Kation enthält:
- man eine Lösung von Oxalsäure oder von einem ihrer Salze oder von einem Derivat von dieser der genannten, nach dem Beigeben des einfach geladenen Kations erhaltenen Mischung beigibt, wodurch man die simultane Präzipitation der Aktinide mit den Oxidationszuständen (IV) und (III), An¹ (IV) und An^{-1'} (III) und von einer Fraktion des einfach geladenen Kations aus der genannten Mischung realisiert.

7. Verfahren zur Co-Präzipitation von wenigstens einem Aktinid im Oxidationszustand (IV) mit wenigstens einem Aktinid im Oxidationszustand (III), bei dem ;
- man eine wässrige Lösung herstellt, die wenigstens ein Aktinid im Oxidationszustand (IV) und wenigstens ein Aktinid im Oxidationszustand (III) enthält, zum Beispiel durch einfaches Mischen von wenigstens zwei Lösungen, von denen jede eine der beiden genannten Aktinide mit dem betreffenden Oxidationszustand enthält, wenn die genannten Aktinide mit den betreffenden Oxidationszuständen in derselben Lösung koexistieren können ;
- man der genannten Aktinidenlösung eine Lösung von Oxalsäure oder von einem ihrer Salze oder von einem Derivat von dieser beigibt, dem ein einfach geladenes Kation beigegeben worden ist, nur bestehend aus Sauerstoff-, Kohlenstoff-, Stickstoff- und Wasserstoffatomen, oder eine zur Bildung dieses Kations geeignete Verbindung wie etwa ein Salz, wodurch man die simultane Präzipitation der Aktinide mit den Oxidationszuständen (III) und (IV) aus der genannten Aktinidenlösung und von einer Fraktion des in der Lösung enthaltenen genannten Kations realisiert.

8. Verfahren nach einem der Ansprüche 1 bis 5, bei dem das genannte stabilisierende einfach geladene Kation ausgewählt wird unter den Kationen, welche die Rolle eines Antinitriermittels spielen.

9. Verfahren nach Anspruch 8, bei dem das genannte stabilisierende einfach geladene Kation ausgewählt wird unter dem Hydrazinium-Ion und den eine oder mehrere Alkylgruppen umfassenden Hydrazinium-Ionen.

10. Verfahren nach Anspruch 6 oder Anspruch 7, bei dem das genannte einfach geladene Kation ausgewählt wird unter dem Ammonium-Ion und den substituierten Ammonium-Ionen, insbesondere unter den quartären Ammonium-Ionen wie zum Beispiel den Tetraalkylammonium-Ionen.

11. Verfahren nach Anspruch 1 oder Anspruch 7, bei dem der chemische oder elektrochemische Reduktionsschritt auf folgende Weise durchgeführt wird :
- für das Uran wird die Reduktion von U(VI) zu U(IV) im Salpetersäuremilieu durch Wasserstoff realisiert, unter Druck, mit einem katalytischen Träger, in Präsenz eines Antinitriermittels ;
- für das Neptunium wird die Reduktion von Np(VI) oder von Np(V) zu Np(IV) durch Hydroxylamin im Salpetersäuremilieu realisiert ;
- für das Plutonium wird die Reduktion des Pu(VI) zu PU(IV) im Salpetersäuremilieu durch Beigeben von Wasserstoffperoxid realisiert, oder die Reduktion des Pu(IV, V, VI) zu Pu(III) wird im Salpetersäuremilieu in Präsenz von Hydrazinum-Ionen durch Elektrolyse mit einem angepassten Potential realisiert;
- für das Protactinium wird die Reduktion des Pa(V) zu Pa(IV) durch Elektrolyse im säuren und komplexbildenden Milieu realisiert.

12. Verfahren nach Anspruch 7, bei dem man außerdem die Stabilisierung der Oxidationszustände (IV) und (III) der Aktinide sicherstellt, indem man in dieser Wässrigen Lösung ein Stabilisierungsmittel, kationisch oder nicht, beigibt, das ausgewählt wird unter den Antinitrier- und/oder Antioxidiermitteln.

13. Verfahren nach Anspruch 12, bei dem das genannte Stabilisierungsmittel ausgewählt wird unter den Sulfaminsäuren und ihren Derivaten wie zum Beispiel die Sulfaminsäure und ihre Salze ; das Hydrazin und die Derivate von Hydrazin wie zum Beispiel das Hydrazin und seine Salze ; das Hydroxylamin und die Derivate von Hydroxylamin wie zum Beispiel das Hydroxylamin und seine Salze ; der Harnstoff und seine Derivate ; die Oxime ; die Hydroxamsäure und ihre Derivate ; das Wasserstoffperoxid ; die Ascorbinsäure und ihre Salze.

14. Verfahren nach einem der vorhergehenden Ansprüche, bei dem die genannten Lösungen von An¹ und An'¹ saure Lösungen sind, vorzugsweise saure wässrige Lösungen.

15. Verfahren nach Anspruch 14, bei dem die genannten Lösungen wässrige Salpetersäurelösungen sind.

16. Verfahren nach einem der Ansprüche 1 bis 12, bei dem die Konzentration der Aktinide An¹ und der Aktinide An'¹ in jeder der Lösungen von 10⁻⁴ bis 1 mol.L⁻¹ reicht, vorzugsweise von 0,1 mol.L⁻¹ bis 0,5 mol.L⁻¹ in den Lösungen von An¹ oder An'¹, und vorzugsweise von 0,1 bis 0,2 mol.L⁻¹ in der Lösung oder Mischung von Aktiniden An¹ (IV) und An'¹ (III), aufgrund dessen die Co-Präzipitation realisiert wird.

17. Verfahren nach einem der vorhergehenden Ansprüche, bei dem das Verhältnis der Molzahl des einfach geladenen Kations - stabilisierend oder nicht, präsent in der Aktinidenlösung und/oder in der präzipitierenden Oxallösung -, mit der Molzahl der Gesamtheit der zu präzipitierenden Aktinide An¹ und An'¹, im Normalfall 0,5 bis 5 , vorzugsweise 0,5 bis 1 beträgt.

18. Verfahren nach einem der vorhergehenden Ansprüche, bei dem die Proportionen der Aktinide in der Lösung oder Mischung von einem oder mehreren Aktiniden (IV) und einem oder mehreren Aktiniden (III) den jeweiligen Proportionen der Aktinide in einer gemischten Verbindung entspricht, zum Beispiel von einem Oxid, das geeignet ist, durch Kalzinierung aus dem Co-Präzipitat hergestellt zu werden.

19. Verfahren nach einem der vorhergehenden Ansprüche, bei dem in der Mischung, aus der die Co-Präzipitation realisiert wird, die Summe der molaren Konzentrationen der Aktinide im Oxidationszustand (IV) die Summe der molaren Konzentrationen der Aktinide im Oxidationszustand (III) überschreitet.

20. Verfahren nach einem der vorhergehenden Ansprüche, bei dem das Verfahren bei einer Temperatur zwischen 0°C und dem Siedepunkt durchgeführt wird.

21. Verfahren nach einem der vorhergehenden Ansprüche, bei dem die Co-Präzipitation oder Simultan-Präzipitation durch enges Vermischen einer Oxal-Ionen enthaltenden Lösung und der Mischung aus wenigstens einem Aktinid (IV) und wenigstens einem Aktinid (III) realisiert wird.

22. Verfahren nach einem der vorhergehenden Ansprüche, bei dem das oder die Aktinide im Oxidationszustand (IV) ausgewählt werden unter dem Thorium (IV), dem Protactinium (IV), dem Neptunium (IV), dem Uran (IV), und dem Plutonium (IV).

23. Verfahren nach einem der vorhergehenden Ansprüche, bei dem das oder die Aktinide im Oxidationszustand (III) ausgewählt werden unter dem Plutonium (III), dem Americium (III), dem Curium (III), dem Berkelium (III) und dem Californium (III).

24. Verfahren nach einem der vorhergehenden Ansprüche, bei dem An¹ U ist und An'¹ Pu ist.

25. Verfahren zur Herstellung von gemischten Verbindungen der Aktinide An¹ und An'¹, bei dem man die genannten Aktinide im Oxidationszustand (IV) und im Oxidationszustand (III) co-präzipitiert durch das Verfahren nach einem der vorhergehenden Ansprüche und man dann die Kalzinierung des auf diese Weise erhaltenen Präzipitats durchführt.

26. Verfahren nach Anspruch 25, bei dem die Kalzinierung unter oxidierender, inerter oder reduzierender Atmosphäre realisiert wird, bei einer Temperatur gleich oder höher als 650°C und während einer Dauer größer oder gleich 1 Stunde.

27. Verfahren nach einem der Ansprüche 25 und 26, bei dem die hergestellten gemischten Verbindungen ausgewählt werden unter den Nitriden, Karbiden und Mischoxiden von Aktiniden.

28. Verfahren nach Anspruch 27, bei dem während der Kalzinierung Kohlenstoff beigegeben wird im Hinblick auf die Herstellung von gemischten Verbindungen ausgewählt unter den gemischten Nitriden und Karbiden von Aktiniden.

29. Verfahren nach Anspruch 28, bei dem die Kalzination mit einer Temperatur höher oder gleich 1000°C durchgeführt wird.

## Claims

1. Method for coprecipitation (or simultaneous precipitation) of at least one actinide in oxidation state (IV) with at least one actinide in oxidation state (III), wherein:
a) a singly charged stabilizing cation consisting only of oxygen, carbon, nitrogen and hydrogen atoms, or a compound such as a salt capable of forming this cation, is added to one or more solutions of actinide(s) containing overall at least one actinide An¹ and at least one actinide An'¹, so as to obtain a solution, mixture, of at least one actinide An¹ in oxidation state (IV), of at least one actinide An'¹ in oxidation state (III) and of the said singly charged stabilizing cation, the value of the oxidation states (IV) and (III) having optionally been obtained during a preliminary or simultaneous step of chemical or electrochemical reduction;
b) a solution of oxalic acid or of one of its salts or of a derivative thereof is added to the said mixture, by means of which simultaneous precipitation of the said actinides An¹(IV) and An'¹(III) and of a fraction of the singly charged stabilizing cation from the said mixture is carried out.

2. Method according to Claim 1, wherein the singly charged stabilizing cation consisting only of oxygen, carbon, nitrogen and hydrogen atoms, or the compound such as a salt capable of forming this cation, is added in the form of a solution of the said cation, or compound such as a salt capable of forming this cation, which solution is mixed with the said one or more solution(s) of actinides.

3. Method according to either one of the preceding claims, wherein step a) is carried out in the following way:
- a singly charged stabilizing cation consisting only of oxygen, carbon, nitrogen and hydrogen atoms, or a compound such as a salt capable of forming this cation, is added to at least one first aqueous solution of at least one actinide An¹, so as to stabilize the oxidation state of said one or more An¹ at the value (IV), this value (IV) of the oxidation state having optionally been obtained during a preliminary or simultaneous step of chemical or electrochemical reduction;
- the said singly charged stabilizing cation is added to at least one second aqueous solution of at least one actinide An'¹, so as to stabilize the oxidation state of the one or more An'¹ at the value (III), this value (III) of the oxidation state having optionally been obtained during a preliminary or simultaneous step of chemical or electrochemical reduction;
- the said at least first and second solutions each containing the singly charged stabilizing cation are intimately mixed.

4. Method according to Claim 1 or 2, wherein step a) is carried out by adding the singly charged stabilizing cation, or the compound, such as a salt, capable of forming this cation, to a single solution containing at least one actinide An¹ capable of being stabilized at oxidation level (IV) and at least one actinide An'¹ capable of being stabilized at oxidation level (III), optionally during a preliminary or simultaneous, chemical or electrochemical step of redox adjustment of the said actinides An¹ and An'¹ respectively at oxidation states (IV) and (III), so as to obtain a solution, mixture, of at least one actinide An¹ in oxidation state (IV), of at least one actinide An'¹ in oxidation state (III) and of the singly charged stabilizing cation.

5. Method according to Claim 1 or 2, wherein the mixture to which the solution of oxalic acid or of one of its salts or of a derivative thereof is added is prepared by reverse co-extraction of the said actinides An¹(IV) and An'¹(III) present in an organic phase in an aqueous solution containing the singly charged stabilizing cation.

6. Method for coprecipitation of at least one actinide in oxidation state (IV) with at least one actinide in oxidation state (III), wherein:
- at least one first aqueous solution of at least one actinide An¹ in oxidation state (IV), and at least one second aqueous solution of at least one actinide An'¹ in oxidation state (III) are intimately mixed;
- a singly charged cation consisting only of oxygen, carbon, nitrogen and hydrogen atoms and not having redox properties vis-à-vis the actinides to be coprecipitated, or a compound, such as a salt, capable of forming this cation, is added to the said mixture, in order to obtain a solution containing the actinides to be precipitated and the singly charged cation;
- a solution of oxalic acid or of one of its salts or of a derivative thereof is added to the said mixture which is obtained after adding the singly charged cation, by means of which simultaneous precipitation of the actinides in oxidation states (IV) and (III), An¹(IV) and An'¹(III), and of a fraction of the singly charged cation from the said mixture is carried out.

7. Method for coprecipitation of at least one actinide in oxidation state (IV) with at least one actinide in oxidation state (III), wherein:
- an aqueous solution containing at least one actinide in oxidation state (IV) and at least one actinide in oxidation state (III) is prepared, for example by simply mixing at least two solutions each containing one of the said actinides in the relevant oxidation state, when the said actinides in the said relevant oxidation states can coexist within the same solution;
- a solution of oxalic acid or of one of its salts or of a derivative thereof, to which a singly charged cation consisting only of oxygen, carbon, nitrogen and hydrogen atoms, or a compound such as a salt capable of forming this cation, has been added, is added to the said solution of actinides, by means of which simultaneous precipitation of the actinides in oxidation states (IV) and (III) from the said solution of actinides and of a fraction of the said cation contained in the solution is carried out.

8. Method according to any one of Claims 1 to 5, wherein the said singly charged stabilizing cation is selected from cations which act as an anti-nitrous agent.

9. Method according to Claim 8, wherein the said singly charged stabilizing cation is selected from the hydrazinium ion and the hydrazinium ions comprising one or more alkyl groups.

10. Method according to Claim 6 or Claim 7, wherein the said singly charged cation is selected from the ammonium ion and substituted ammonium ions, more particularly from quaternary ammonium ions such as tetraalkyl ammonium ions.

11. Method according to Claim 1 or Claim 7, wherein the step of chemical or electrochemical reduction is carried out in the following way:
- for uranium, the reduction of U(VI) to U(IV) in a nitric medium is carried out by hydrogen, under pressure, with a catalytic support, in the presence of an anti-nitrous agent;
- for neptunium, the reduction of Np(VI) to Np(IV) or Np(V) to Np(IV) is carried out by hydroxylamine in a nitric medium;
- for plutonium, the reduction of Pu(VI) to Pu(IV) is carried out in a nitric medium by adding hydrogen peroxide, or the reduction of Pu(IV, V, VI) to Pu(III) is carried out in a nitric medium in the presence of hydrazinium ions by electrolysis at a suitable potential;
- for protactinium, the reduction of Pa(V) to Pa(IV) is carried out by electrolysis in a complexing acidic medium.

12. Method according to Claim 7, wherein the oxidation states (IV) and (III) of the actinides are furthermore stabilized by adding in said aqueous solution a cationic or non-cationic stabilizing agent selected from anti-nitrous and/or antioxidizing compounds.

13. Method according to Claim 12, wherein the said stabilizing agent is selected from sulfamic acids and their derivatives, such as sulfamic acid and its salts; hydrazine and hydrazine derivatives, such as hydrazine and its salts; hydroxylamine and hydroxylamine derivatives, such as hydroxylamine and its salts; urea and its derivatives; oximes; hydroxamic acid and its derivatives; hydrogen peroxide; ascorbic acid and its salts.

14. Method according to any one of the preceding claims, wherein the said solutions of actinides An¹ and An'¹ are acidic solutions, preferably aqueous acidic solutions.

15. Method according to Claim 14, wherein the said solutions are aqueous nitric acid solutions.

16. Method according to any one of Claims 1 to 12, wherein the concentration of the actinides An¹ and of the actinides An¹ in each of the solutions is from 10⁻⁴ to 1 mol.l⁻¹, preferably from 0.1 to 0.5 mol.l⁻¹ in the solutions of An¹ or An'¹, and preferably from 0.1 to 0.2 mol.1⁻¹ in the solution or mixture of actinides An¹(IV) and An'¹(III) from which the coprecipitation is carried out.

17. Method according to any one of the preceding claims, wherein the ratio of the number of moles of stabilizing or non-stabilizing singly charged cation present in the solution of actinides, and/or in the precipitating oxalic solution, to the number of moles of all the actinides An¹ and An'¹ to be precipitated is generally from 0.5 to 5, preferably from 0.5 to 1.

18. Method according to any one of the preceding claims, wherein the proportions of the actinides in the solution or mixture of one or more actinides (IV) and of one or more actinides (III) correspond to the respective proportions of the actinides in a mixed compound, such as an oxide, which can be prepared by calcining from the coprecipitate.

19. Method according to any one of the preceding claims, wherein the sum of the molar concentrations of the actinides in oxidation state (IV) exceeds the sum of the molar concentrations of the actinides in oxidation state (III) in the mixture from which the coprecipitation is carried out.

20. Method according to any one of the preceding claims, wherein the method is carried out at a temperature of between 0°C and boiling point.

21. Method according to any one of the preceding claims, wherein the coprecipitation or simultaneous precipitation is carried out by intimately mixing a solution containing oxalate ions and the mixture of at least one actinide (IV) and of at least one actinide (III).

22. Method according to any one of the preceding claims, wherein the actinide or actinides in oxidation state (IV) are selected from thorium(IV), protactinium(IV), neptunium(IV), uranium(IV) and plutonium(IV).

23. Method according to any one of the preceding claims, wherein the actinide or actinides in oxidation state (III) are selected from plutonium(III), americium(III), curium(III), berkelium(III) and californium(III).

24. Method according to any one of the preceding claims, wherein An¹ is U and An'¹ is Pu.

25. Method for preparation of mixed compounds of the actinides An¹ and An'¹, wherein the said actinides are coprecipitated in oxidation state (IV) and oxidation state (III) by the method according to any one of the preceding claims, then the precipitate obtained in this way is calcined.

26. Method according to Claim 25, wherein the calcining is carried out in an oxidizing, inert or reducing atmosphere, at a temperature equal to or greater than 650°C and for a duration of greater than or equal to 1 hour.

27. Method according to either one of Claims 25 and 26, wherein the mixed compounds which are prepared are selected from mixed nitrides, carbides and oxides of actinides.

28. Method according to Claim 27, wherein carbon is added during the calcining with a view to preparing mixed compounds selected from mixed nitrides and carbides of actinides.

29. Method according to Claim 28, wherein the calcining is carried out at a temperature greater than or equal to 1000°C.
